# EUROPEAN PATENT APPLICATION

(11) **EP 3 879 401 A1**
(43) Date of publication of application: **15.09.2021**
(21) Application number: 18942907.9
(22) Date of filing: 10.12.2018
(51) Int. Cl.: G06F 9/451, G06F 3/048

(54) **AUTOMATIC SCREEN-SPLITTING METHOD, GRAPHICAL USER INTERFACE, AND ELECTRONIC DEVICE**

(71) Applicant: Huawei Technologies Co., Ltd., Longgang District Shenzhen, Guangdong 518129 (CN)
(72) Inventor: XU, Jie, Shenzhen, Guangdong 518129 (CN)
(74) Representative: Epping - Hermann - Fischer
(86) International application number: PCT/CN2018/120094
(87) International publication number: WO 2020/118490

(57) **Abstract**

This application discloses an automatic screen splitting method, applied to an electronic device provided with a foldable display screen. The method includes: displaying, by the electronic device, a first user interface of a first application on the foldable display screen; receiving, by the electronic device, a first unfolding operation performed by a user on the foldable display screen; in response to the first unfolding operation, displaying, by the electronic device, a second user interface of the first application and a shortcut control on the foldable display screen, where the second user interface of the first application is displayed in full screen mode, and the shortcut control is configured to display one or more options; receiving, by the electronic device, a first selection operation performed on the option; and in response to the first selection operation, displaying, by the electronic device, a third user interface of the first application and a first user interface of a second application on the foldable display screen in split-screen mode. In this way, the user can conveniently use a multi-application split-screen display function of the foldable display screen.

## Description

### TECHNICAL FIELD

This application relates to the field of electronic technologies, and in particular, to an automatic screen splitting method, a graphical user interface, and an electronic device.

### BACKGROUND

With rapid development of digital technologies, an intelligent terminal device has become a necessity in people's life, and the intelligent terminal device boasts an increasingly large screen. To give full play to application value of a large screen, a split-screen display technology is developed, so that a user can simultaneously process a plurality of applications on a same touchscreen.

Currently, a flexible screen has attracted much attention for a unique feature and great potential. Compared with a conventional screen, the flexible screen is highly flexible and bendable, and can provide a user with a new interaction manner based on the bendable feature, to meet more requirements of the user on an electronic device. For an electronic device provided with a foldable display screen, the foldable display screen on the electronic device may be switched between a small screen in a folded state and a large screen in an unfolded state at any time. Therefore, the user increasingly frequently uses a screen splitting function on the electronic device provided with the foldable display screen.

However, when a conventional multi-application split-screen function is used for screen splitting, the user needs to enable a split-screen display function by using a settings menu, and then select an application that needs to be displayed in split-screen mode and drag the application to a screen area to implement split-screen display. In this manner, a screen splitting operation is cumbersome and complex, and the user further needs to spend time searching for an application for screen splitting, consuming time of the user.

### SUMMARY

This application provides an automatic screen splitting method, a graphical user interface, and an electronic device, so that a user can conveniently use a multi-application split-screen display function of a foldable display screen.

According to a first aspect, this application provides an automatic screen splitting method, including: An electronic device displays a first user interface of a first application on the foldable display screen; the electronic device receives a first unfolding operation performed by a user on the foldable display screen; in response to the first unfolding operation, the electronic device displays a second user interface of the first application and a shortcut control on the foldable display screen, where the second user interface of the first application is displayed in full screen mode, and the shortcut control is configured to display one or more options; the electronic device receives a first selection operation performed on the option; and in response to the first selection operation, the electronic device displays a third user interface of the first application and a first user interface of a second application on the foldable display screen in split-screen mode.

According to the automatic screen splitting method provided in this application, when the electronic device receives an unfolding operation performed by the user, a shortcut menu may be displayed, so that the user can quickly perform screen splitting when the foldable screen is unfolded into a large screen, thereby improving user experience.

In an implementation, before the first selection operation is received, the method further includes: The electronic device receives a first input operation performed by the user on the second user interface of the first application; and in response to the first input operation, the electronic device may display a fourth user interface of the first application. An option in the shortcut control before the first input operation is received is different from an option in the shortcut control after the first input operation is received. In this way, an option related to an interface of the first application may be displayed in the shortcut control based on a change of the currently displayed interface of the first application, so that the user can directly perform screen splitting for the associated interface, thereby improving user experience.

In an implementation, a display area of the foldable display screen is divided into a first display area and a second display area, the second user interface of the first application is displayed in the first display area, and the first user interface of the second application is displayed in the second display area. The method further includes: The electronic device receives a second input operation performed by the user on the foldable display screen; and in response to the second input operation, the electronic device displays the first user interface of the second application in the first display area, and displays the third user interface of the first application in the second display area. In this way, display positions of a plurality of interfaces displayed in split-screen mode may be switched based on a requirement of the user, thereby improving user experience.

In an implementation, a display area of the foldable display screen is divided into a screen A, a screen B, and a side screen. The method further includes: The electronic device receives a first folding operation performed by the user on the foldable display screen; and in response to the first folding operation, the electronic device displays the first user interface of the first application on the screen A of the foldable display screen, and displays a first screen splitting navigation bar on the side screen. The first screen splitting navigation bar includes an option of the second application and a screen splitting button. The option of the second application is configured to: receive a third input operation performed by the user, and display a second user interface of the second application on the screen A. The screen splitting button is configured to: receive a fourth input operation performed by the user, and display a fifth user interface of the first application and a third user interface of the second application on the screen A in split-screen mode. In this way, when a folding operation performed by the user is received, an option of an application displayed in split-screen mode when the foldable display screen is in an unfolded state and the screen splitting button may be displayed on the side screen, and based on a requirement of the user, the user can conveniently perform application display switching and continue screen splitting when the foldable display screen is in a folded state.

In an implementation, a display area of the foldable display screen is divided into a screen A, a screen B, and a side screen. When the third user interface of the first application and the first user interface of the second application are displayed on the foldable display screen in split-screen mode, the method further includes: The electronic device receives a second folding operation performed by the user on the foldable display screen; and in response to the second folding operation, the electronic device determines, from the first application and the second application, a last application operated by the user before the first folding operation is received.

If the last application operated by the user is the first application, the electronic device displays the first user interface of the first application on the screen A of the foldable display screen, and displays a first screen splitting navigation bar on the side screen of the foldable display screen. The first screen splitting navigation bar includes an option of the second application and a screen splitting button. The option of the second application is configured to: receive a third input operation performed by the user, and display a third user interface of the second application on the screen A. The screen splitting button is configured to: receive a fourth input operation performed by the user, and display a fifth user interface of the first application and a third user interface of the second application on the screen A in split-screen mode.

If the last application operated by the user is the second application, the electronic device displays a third user interface of the second application on the screen A of the foldable display screen, and displays a second screen splitting navigation bar on the side screen of the foldable display screen. The second screen splitting navigation bar includes an option of the first application and the screen splitting button. The option of the first application is configured to: receive a fifth input operation performed by the user, and display the first user interface of the first application on the screen A. In this way, a user interface recently used by the user may be displayed on the screen A, so that after the foldable display screen is in a folded state, the user can view, in a timely manner, the user interface recently used by the user.

In an implementation, the method further includes: When the electronic device displays the third user interface of the first application and the third user interface of the second application on the screen A of the foldable display screen in split-screen mode, the electronic device receives a second unfolding operation performed by the user; and in response to the second unfolding operation, the electronic device displays the second user interface of the first application and the first user interface of the second application on the foldable display screen in split-screen mode. In this way, when a plurality of user interfaces are displayed on the screen A in split-screen mode, if the foldable display screen is switched to an unfolded state, the plurality of user interfaces may still be displayed in split-screen mode, thereby facilitating operation for the user.

In an implementation, that the electronic device displays the third user interface of the first application and the first user interface of the second application on the foldable display screen in split-screen mode specifically includes: The electronic device determines whether there is a video application or a game application in the first application and the second application; and if there is a video application or a game application in the first application and the second application, the electronic device displays the third user interface of the first application and the first user interface of the second application on the foldable display screen through horizontal screen splitting; or if there is no video application or game application in the first application and the second application, the electronic device displays the third user interface of the first application and the first user interface of the second application on the foldable display screen through vertical screen splitting. In this way, horizontal screen splitting is automatically performed by default for the game application or the video application, to improve a viewing effect of the user.

In an implementation, the first application is different from the second application. Alternatively, the first application is the same as the second application. Alternatively, when the second application is the same as the first application, the option of the second application is the option of the first application. Alternatively, the first application is an album application. Alternatively, the second application is a music application. Alternatively, the shortcut menu is floated in the third user interface of the first application. Alternatively, the first user interface of the first application is different from the second user interface of the first application. Alternatively, that the electronic device displays the first user interface of the first application on the foldable display screen specifically includes: displaying the first user interface of the first application in a part of the area of the foldable display screen. Alternatively, that the electronic device displays the third user interface of the first user and the first user interface of the second application on the foldable display screen in split-screen mode specifically includes: The electronic device displays the third user interface of the first user and the first user interface of the second application on the foldable display screen in split-screen mode, and displays a screen splitting line at an intersection of the third user interface of the first application and the first user interface of the second application. The screen splitting line is used to adjust a ratio at which the third user interface of the first application and the first user interface of the second application are displayed on the foldable display screen.

According to a second aspect, this application provides a graphical user interface. The graphical user interface is stored in an electronic device. The electronic device includes a foldable display screen, a memory, and one or more processors. The one or more processors are configured to execute one or more computer programs stored in the memory. The graphical user interface includes: displaying a first user interface of a first application on the foldable display screen; in response to a received first unfolding operation performed on the foldable display screen, displaying a second user interface of the first application and a shortcut control on the foldable display screen, where the second user interface of the first application is displayed in full screen mode, and the shortcut control is configured to display one or more options; and in response to a received first selection operation performed on the option, displaying a third user interface of the first application and a first user interface of a second application on the foldable display screen in split-screen mode.

In an implementation, the graphical user interface further includes: in response to a received first input operation performed on the second user interface of the first application, displaying a fourth user interface of the first application on the foldable display screen. An option in the shortcut control before the first input operation is received is different from an option in the shortcut control after the first input operation is received.

In an implementation, a display area of the foldable display screen is divided into a first display area and a second display area, the third user interface of the first application is displayed in the first display area, and the first user interface of the second application is displayed in the second display area. The graphical user interface further includes: in response to a second input operation performed on the foldable display screen, displaying the first user interface of the second user in the first display area, and displaying the third user interface of the first application in the second display area.

In an implementation, a display area of the foldable display screen is divided into a screen A, a screen B, and a side screen. The graphical user interface further includes: in response to a received first folding operation performed on the foldable display screen, displaying the first user interface of the first application on the screen A, and displaying a first screen splitting navigation bar on the side screen. The first screen splitting navigation bar includes an option of the second application and a screen splitting button. The option of the second application is configured to: receive a third input operation performed by a user, and display a second user interface of the second application on the screen A. The screen splitting button is configured to: receive a fourth input operation performed by the user, and display a fifth user interface of the first application and a third user interface of the second application on the screen A in split-screen mode.

In an implementation, a display area of the foldable display screen is divided into a screen A, a screen B, and a side screen. When the second user interface of the first application and the first user interface of the second application are displayed on the foldable display screen in split-screen mode, the graphical user interface further includes: in response to a received second folding operation performed on the foldable display screen, if a last application operated by the user is the first application, displaying the third user interface of the first application on the screen A, and displaying a first screen splitting navigation bar on the side screen, where the first screen splitting navigation bar includes an option of the second application and a screen splitting button; the option of the second application is configured to: receive a third input operation performed by the user, and display a second user interface of the second application on the screen A; and the screen splitting button is configured to: receive a fourth input operation performed by the user, and display a fifth user interface of the first application and a third user interface of the second application on the screen A in split-screen mode; or if a last application operated by the user is the second application, displaying a third user interface of the first application on the screen A, and displaying the second screen splitting navigation bar on the side screen, where the second screen splitting navigation bar includes an option of the first application and the screen splitting button; and the option of the first application is configured to: receive a fifth input operation performed by the user, and display the first user interface of the first application on the screen A.

In an implementation, the graphical user interface further includes: when displaying the third user interface of the first application and the third user interface of the second application on the screen A in split-screen mode, in response to a received second unfolding operation performed on the foldable display screen, displaying the third user interface of the first application and the first user interface of the second application on the foldable display screen in split-screen mode.

In an implementation, the displaying the third user interface of the first application and the first user interface of the second application on the foldable display screen in split-screen mode specifically includes: when there is a video application or a game application in the first application and the second application, displaying the third user interface of the first application and the first user interface of the second application on the foldable display screen through horizontal screen splitting; or when the first application and the second application are non-video applications or non-game applications, displaying the third user interface of the first application and the first user interface of the second application on the foldable display screen through vertical screen splitting.

In an implementation, the first application is different from the second application. Alternatively, the first application is the same as the second application. Alternatively, when the second application is the same as the first application, the option of the second application is the option of the first application. Alternatively, the first application is an album application. Alternatively, the second application is a music application. Alternatively, the shortcut menu is floated in the second user interface of the first application. Alternatively, the first user interface of the first application is different from the second user interface of the first application. Alternatively, the displaying a first user interface of a first application on the foldable display screen specifically includes: displaying the first user interface of the first application in a part of the area of the foldable display screen. Alternatively, the displaying the third user interface of the first user and the first user interface of the second application on the foldable display screen in split-screen mode specifically includes: displaying the third user interface of the first user and the first user interface of the second application on the foldable display screen in split-screen mode, and displaying a screen splitting line at an intersection of the third user interface of the first application and the first user interface of the second application. The screen splitting line is used to adjust a ratio at which the third user interface of the first application and the first user interface of the second application are displayed on the foldable display screen.

According to a third aspect, this application provides an automatic screen splitting method. The method may include: When a foldable display screen is in a folded state, an electronic device displays an interface of a first application (for example, an interface of a gallery application) on a screen A of the foldable display screen, where a display area of the foldable display screen in the folded state may include the screen A, a screen B, and a side screen; the electronic device receives an unfolding operation performed by a user on the foldable display screen; in response to the unfolding operation, the foldable display screen is switched from the folded state to an unfolded state, and the electronic device displays an interface of the first application and a shortcut control on the foldable display screen in the unfolded state, where the shortcut control includes options of one or more related applications; the electronic device receives an input operation performed by the user on an option of a second application in the one or more related applications, and in response to the input operation, displays an interface of the first application and an interface of the second application on the foldable display screen in the unfolded state in split-screen mode; the electronic device receives a folding operation performed by the user, and in response to the folding operation performed on the electronic device, the foldable display screen is switched from the unfolded state to the folded state, and the electronic device may display the interface of the first application on the screen A of the foldable display screen, and display a screen splitting navigation bar on the side screen of the foldable display screen, where the screen splitting navigation bar includes the option of the second application, a screen splitting button, and a clear button; the electronic device receives an input operation performed by the user on the option of the second application in the screen splitting navigation bar, and in response to the input operation, the electronic device may display an interface of the second application on the screen A of the foldable display screen; the electronic device receives an input operation performed by the user on the screen splitting button in the screen splitting navigation bar, and in response to the input operation, the electronic device may display an interface of the first application and an interface of the second application on the screen A of the foldable display screen in split-screen mode; and the electronic device receives an input operation performed by the user on the clear button in the screen splitting navigation bar, and in response to the input operation, the electronic device clears the screen splitting navigation bar displayed on the side screen.

According to a fourth aspect, this application provides an electronic device, including a memory, a foldable display screen, and at least one processor. The memory stores program code. The memory, the foldable display screen, and the at least one processor communicate with each other. The processor runs the code to indicate the electronic device to perform the automatic screen splitting method according to any one of the first aspect and the possible implementations of the first aspect.

According to fifth aspect, this application provides a computer storage medium, including computer instructions. When the computer instructions run on an electronic device, the electronic device is enabled to perform the automatic screen splitting method according to any one of the first aspect and the possible implementations of the first aspect.

According to a sixth aspect, this application provides a computer program product. When the computer program product runs on a computer, the computer is enabled to perform the automatic screen splitting method according to any one of the first aspect and the possible implementations of the first aspect.

### BRIEF DESCRIPTION OF DRAWINGS

FIG. 1 is a schematic structural diagram of an electronic device according to an embodiment of this application;
FIG. 2a to FIG. 2c are schematic structural diagrams of a foldable display screen according to an embodiment of this application;
FIG. 3a to FIG. 3j are schematic diagrams of a group of interfaces according to an embodiment of this application;
FIG. 4a to FIG. 4f are schematic diagrams of another group of interfaces according to an embodiment of this application;
FIG. 5a to FIG. 5c are schematic diagrams of another group of interfaces according to an embodiment of this application;
FIG. 6a and FIG. 6b are schematic diagrams of another group of interfaces according to an embodiment of this application;
FIG. 7a and FIG. 7b are schematic diagrams of another group of interfaces according to an embodiment of this application;
FIG. 8a and FIG. 8b are schematic diagrams of another group of interfaces according to an embodiment of this application;
FIG. 9a and FIG. 9b are schematic diagrams of another group of interfaces according to an embodiment of this application;
FIG. 10a and FIG. 10b are schematic diagrams of another group of interfaces according to an embodiment of this application;
FIG. 11a and FIG. 11b are schematic diagrams of another group of interfaces according to an embodiment of this application;
FIG. 12a and FIG. 12b are schematic diagrams of another group of interfaces according to an embodiment of this application;
FIG. 13A and FIG. 13B are a schematic flowchart of an automatic screen splitting method according to an embodiment of this application; and
FIG. 14 is a schematic structural diagram of another electronic device according to an embodiment of this application.

### DESCRIPTION OF EMBODIMENTS

The following clearly and completely describes technical solutions in the embodiments of this application with reference to the accompanying drawings. In descriptions of the embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of the embodiments of this application, "a plurality of' means two or more.

The following terms "first" and "second" are merely intended for descriptions, and shall not be understood as an indication or implication of relative importance or implicit indication of the quantity of indicated technical features. Therefore, a feature limited by "first" or "second" may explicitly or implicitly include one or more features. In the descriptions of the embodiments of this application, unless otherwise specified, "a plurality of' means two or more.

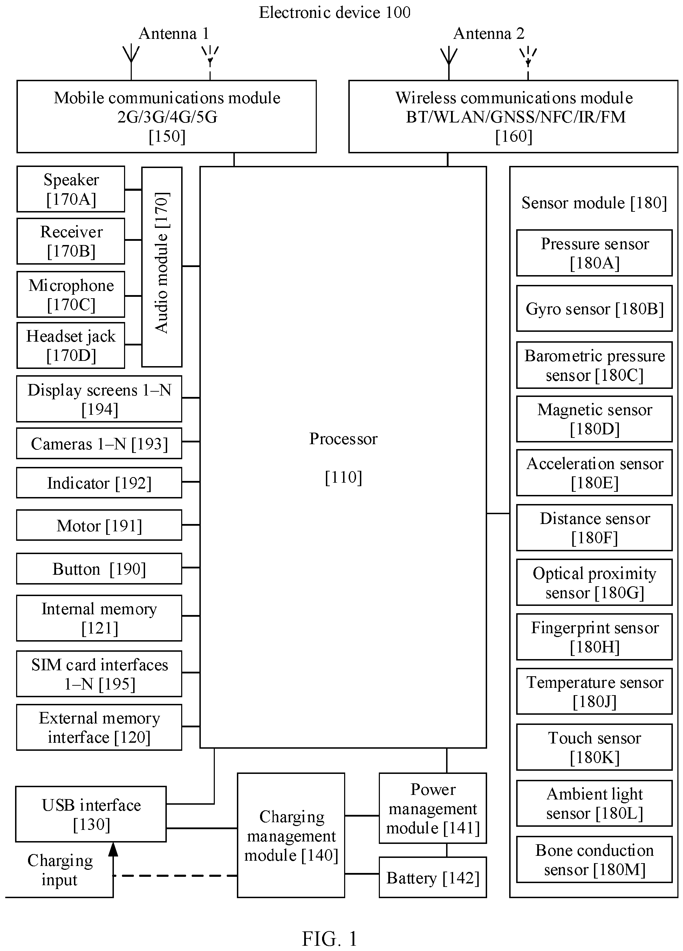

FIG. 1 is a schematic structural diagram of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that a structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store an instruction and data. In some embodiments, the memory in the processor 110 is a cache memory. The memory may store an instruction or data just used or cyclically used by the processor 110. If the processor 110 needs to use the instruction or the data again, the processor 110 may directly invoke the instruction or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through an I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be configured to: perform audio communication, and sample, quantize, and code an analog signal. In some embodiments, the audio module 170 may be coupled to the wireless communications module 160 through a PCM bus interface. In some embodiments, the audio module 170 may also transmit an audio signal to the wireless communications module 160 through the PCM interface, to implement a function of answering a call by using the Bluetooth headset. Both the I2S interface and the PCM interface may be configured to perform audio communication.

The UART interface is a universal serial data bus, and is used configured to perform asynchronous communication. The bus may be a bidirectional communications bus. The bus converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music through a Bluetooth headset.

The MIPI interface may be configured to connect the processor 110 to a peripheral device such as the display screen 194 or the camera 193. The MIPI interface includes a camera serial interface (camera serial interface, CSI), a display serial interface (display serial interface, DSI), or the like. In some embodiments, the processor 110 communicates with the camera 193 through the CSI interface, to implement a photographing function of the electronic device 100. The processor 110 communicates with the display screen 194 through the DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display screen 194, the wireless communications module 160, the audio module 170, the sensor module 180, or the like. The GPIO interface may alternatively be configured as an I2C interface, an I2S interface, a UART interface, an MIPI interface, or the like.

The USB interface 130 is an interface that complies with a USB standard specification, and may be specifically a mini USB interface, a micro USB interface, a USB Type-C interface, or the like. The USB interface 130 may be configured to connect to the charger to charge the electronic device 100, or may be configured to transmit data between the electronic device 100 and a peripheral device, or may be configured to connect to a headset to play audio through the headset. This interface may be further configured to connect to another electronic device such as an AR device.

It may be understood that an interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from the charger. The charger may be a wireless charger, or may be a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. The charging management module 140 supplies power to the electronic device by using the power management module 141 while charging the battery 142.

The power management module 141 is configured to connect the battery 142, the charging management module 140, and the processor 110. The power management module 141 receives an input of the battery 142 and/or an input of the charging management module 140, and supplies power to the processor 110, the internal memory 121, the display screen 194, the camera 193, the wireless communications module 160, and the like. The power management module 141 may be further configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communications module 150, the wireless communications module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communications module 150 may provide a wireless communication solution that includes 2G/3G/4G/5G or the like and that is applied to the electronic device 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert the signal into an electromagnetic wave for radiation through the antenna 1. In some embodiments, at least some functional modules of the mobile communications module 150 may be disposed in the processor 110. In some embodiments, at least some functional modules of the mobile communications module 150 and at least some modules of the processor 110 may be disposed in a same device

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal by using an audio device (which is not limited to the speaker 170A, the receiver 170B, or the like), or displays an image or a video through the display screen 194. In some embodiments, the modem processor may be an independent component. In some other embodiments, the modem processor may be independent of the processor 110, and is disposed in a same device as the mobile communications module 150 or another functional module.

The wireless communications module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communications module 160 may be one or more components integrated into at least one communications processor module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communications module 150 in the electronic device 100 are coupled, and the antenna 2 and the wireless communications module 160 in the electronic device 100 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 implements the display function by using the GPU, the display screen 194, the application processor, and the like. The GPU is a microprocessor for image processing, and is connected to the display screen 194 and the application processor. The GPU is configured to: perform mathematical and geometric calculation, and render an image. The processor 110 may include one or more GPUs that execute program instructions to generate or change display information.

The display screen 194 is configured to display an image, a video, or the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, quantum dot light emitting diodes (quantum dot light emitting diodes, QLED), or the like. In some embodiments, the electronic device 100 may include one or N display screens 194, where N is a positive integer greater than 1.

In some embodiments of this application, when the display panel is made of a material such as an OLED, an AMOLED, or an FLED, the display screen 194 in FIG. 1 may be bent. Herein, that the display screen 194 may be bent means that the display screen may be bent to any angle at any position, and may be held at the angle. For example, the display screen 194 may be vertically folded from the middle. Alternatively, the display screen 194 may be horizontally folded from the middle. In this application, a display screen that can be bent is referred to as a foldable display screen. The foldable display screen may be one screen, or may be a display screen formed by combining a plurality of screens. This is not limited herein.

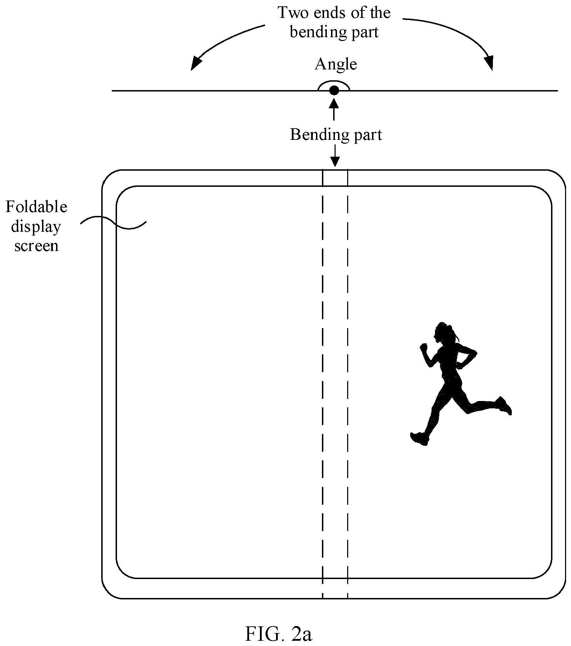

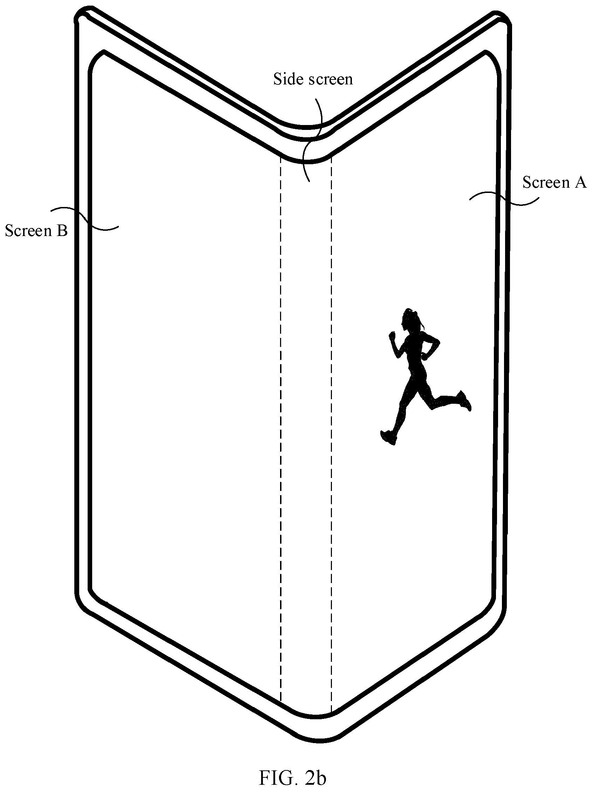

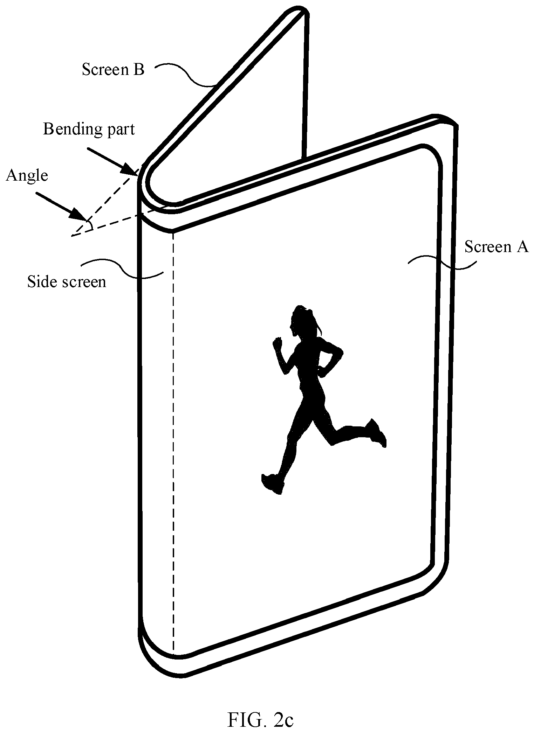

For example, referring to FIG. 2a, FIG. 2b, and FIG. 2c, the foldable display screen may include at least two physical states: an unfolded state and a folded state. As shown in FIG. 2a, the foldable display screen is in the unfolded state. That is, an angle formed between left and right ends of a middle bending part of the foldable display screen that can be vertically folded from the middle (or upper and lower ends of a middle bending part of the foldable display screen if the foldable display screen is horizontally folded) is between a first angle and 180 degrees. The first angle is greater than 0 degrees and less than 180 degrees. For example, the first angle may be 90 degrees. As shown in FIG. 2b and FIG. 2c, the foldable display screen may alternatively be in the folded state. That is, an angle formed between the left and right ends of the middle bending part of the foldable display screen (or the upper and lower ends of the middle bending part of the foldable display screen if the foldable display screen is horizontally folded) is between 0 degrees and the first angle. In this embodiment of this application, a display area of the foldable display screen that enters the folded state may be divided into a screen A, a screen B, and a side screen. The foldable display screen in the unfolded state may be folded in a direction in which the screen A and the screen B face each other, or may be folded in a direction in which the screen A and the screen B are back to back. In some embodiments, the angle formed between the left and right ends of the middle bending part of the foldable display screen (or the upper and lower ends of the middle bending part of the foldable display screen if the foldable display screen is horizontally folded) may be between 0 degrees and +180 degrees. For example, the foldable display screen may be bent in the direction in which the screen A and the screen B face each other to enter the folded state in which the angle is 30 degrees, or may be bent in the direction in which the screen A and the screen B are back to back to enter the folded state in which the angle is 30 degrees.

The electronic device 100 may further include an angle sensor (not shown in FIG. 1). The angle sensor may be disposed at a bending part of the foldable display screen. The electronic device 100 may measure, by using the angle sensor (not shown in FIG. 1) disposed at the bending part of the foldable display screen, the angle formed between the two ends of the middle bending part of the foldable display screen. When the angle is greater than or equal to the first angle, the electronic device 100 may identify, by using the angle sensor, that the foldable display screen enters the unfolded state. When the angle is less than or equal to the first angle, the electronic device 100 may identify, by using the angle sensor, that the foldable display screen enters the folded state.

In some other embodiments, the electronic device 100 may alternatively identify, by using a physical switch disposed at the bending part of the foldable display screen, whether the foldable display screen is in the folded state. For example, when the electronic device receives a folding operation performed by a user on the foldable display screen, the physical switch disposed on the electronic device is triggered to be turned on, and the electronic device 100 may determine that the foldable display screen is in the folded state. When the electronic device 100 receives an unfolding operation performed by the user on the foldable display screen, the physical switch disposed on the electronic device is triggered to be turned off, and the electronic device may determine that the foldable display screen is in the unfolded state. The foregoing example is merely used to explain this application and shall not be construed as a limitation.

When the foldable display screen is in the folded state, content may be displayed in only a part or all of the area of the foldable display screen. For example, as shown in FIG. 2c, the foldable display screen in the folded state may be divided into the screen A, the screen B, and the side screen. Only the screen A may be configured to display interface content output by a system, or only the screen A and the side screen may be configured to display interface content output by a system. The screen B may be turned off without displaying any interface element. In an implementation, the screen B may alternatively be configured to display a date, time, and the like.

When the foldable display screen is in the unfolded state, content may be displayed on the foldable display screen in full screen mode. In a possible implementation, when interface content is displayed in full screen mode, the interface content may occupy all of the display area of the foldable display screen. In another possible implementation, the interface content may occupy only a part of the display area of the foldable display screen. For example, when the display screen is a special-shaped cutting screen (Notch screen), the interface content is displayed on a middle part of the special-shaped cutting screen. When an edge part on one or either side is in a black screen state, it may be considered that the interface content is displayed on the foldable display screen in full screen mode.

The electronic device 100 may implement the photographing function by using the ISP, the camera 193, the video codec, the GPU, the display screen 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on image noise, brightness, and complexion. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into a standard image signal in a format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy or the like.

The video codec is configured to: compress or decompress a digital video. The electronic device 100 may support one or more types of video codecs. In this way, the electronic device 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100, for example, image recognition, facial recognition, speech recognition, and text understanding, can be implemented by using the NPU.

The external memory interface 120 may be configured to connect to an external memory card such as a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store one or more computer programs, where the one or more computer programs include instructions. The processor 110 may run the instructions stored in the internal memory 121, so that the electronic device 100 performs the method provided in some embodiments of this application. The internal memory 121 may include a program storage area and a data storage area. The program storage area may store an operating system, an application required by at least one function (for example, a sound playing function or an image playing function), and the like. The data storage area may store data (such as audio data and a phone book) created during use of the electronic device 100, and the like. In addition, the internal memory 121 may include a highspeed random access memory, or may include a nonvolatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor, to perform various function applications of the electronic device 100 and data processing.

The electronic device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to: code and decode an audio signal. In some embodiments, the audio module 170 may be disposed in the processor 110, or some functional modules of the audio module 170 are disposed in the processor 110.

The speaker 170A, also referred to as a "horn", is configured to convert an audio electrical signal into a sound signal. The electronic device 100 may listen to music or answer a hands-free call by using the speaker 170A.

The receiver 170B, also referred to as an "earpiece", is configured to convert an audio electrical signal into a sound signal. When a call is answered or voice information is received by using the electronic device 100, the receiver 170B may be placed close to a human ear to listen to voice.

The microphone 170C, also referred to as a "mike" or a "voice tube", is configured to convert a sound signal into an electrical signal. When making a call or sending voice information, a user may make a sound by moving a human mouth close to the microphone 170C to input a sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, reduce noise, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display screen 194.

There are many types of pressure sensors 180A, such as a resistive pressure sensor, an inductive pressure sensor, and a capacitive pressure sensor. The capacitive pressure sensor may include at least two parallel plates with conductive materials. When a force is applied to the pressure sensor 180A, capacitance between electrodes changes. The electronic device 100 determines pressure intensity based on a change of the capacitance. When a touch operation is performed on the display screen 194, the electronic device 100 detects intensity of the touch operation based on the pressure sensor 180A. The electronic device 100 may also calculate a touch position based on a detection signal of the pressure sensor 180A. In some embodiments, touch operations that are performed on a same touch position but have different touch operation intensity may correspond to different operation instructions. For example, when a touch operation whose touch operation intensity is less than a first pressure threshold is performed on a Messages option, an instruction for viewing an SMS message is executed. When a touch operation whose touch operation intensity is greater than or equal to the first pressure threshold is performed on a Messages option, an instruction for creating a new SMS message is executed.

The gyro sensor 180B may be configured to determine a motion posture of the electronic device 100. In some embodiments, an angular velocity of the electronic device 100 around three axes (namely, x, y, and z axes) may be determined by using the gyro sensor 180B. The gyro sensor 180B may be used for image stabilization during photographing. For example, when the shutter is pressed, the gyro sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyro sensor 180B may also be used in navigation and motion sensing game scenarios.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall effect sensor. The electronic device 100 may detect opening and closing of a flip leather case by using the magnetic sensor 180D. In some embodiments, when the electronic device 100 is a clamshell phone, the electronic device 100 may detect opening and closing of a flip cover by using the magnetic sensor 180D. Further, a feature such as automatic unlocking of the flip cover is set based on a detected opening or closing state of the leather case or a detected opening or closing state of the flip cover.

The acceleration sensor 180E may detect magnitude of accelerations of the electronic device 100 in all directions (usually on three axes), may detect magnitude and a direction of gravity when the electronic device 100 is static, and may be further configured to identify a posture of the electronic device, and applied to an application such as switching between landscape mode and portrait mode or a pedometer.

The distance sensor 180F is configured to measure a distance. The electronic device 100 may measure the distance through infrared or laser. In some embodiments, in a photographing scenario, the electronic device 100 may measure a distance by using the distance sensor 180F, to implement fast focusing.

For example, the optical proximity sensor 180G may include a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear to make a call, to automatically turn off a screen for power saving. The optical proximity sensor 180G may also be used in a leather case mode or a pocket mode to automatically unlock or lock the screen.

The ambient light sensor 180L is configured to sense ambient light brightness. The electronic device 100 may adaptively adjust brightness of the display screen 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor close to the temperature sensor 180J, to reduce power consumption and implement thermal protection. In some other embodiments, when the temperature is less than another threshold, the electronic device 100 heats the battery 142 to prevent the electronic device 100 from being shut down abnormally because of a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display screen 194, and the touch sensor 180K and the display screen 194 form a touchscreen, which is also referred to as a "touchscreen". The touch sensor 180K is configured to detect a touch operation performed on or near the touch sensor 180K. The touch sensor may transfer the detected touch operation to the application processor to determine a touch event type. Visual output related to the touch operation may be provided through the display screen 194. In some other embodiments, the touch sensor 180K may alternatively be disposed on a surface of the electronic device 100 at a location different from that of the display screen 194.

The bone conduction sensor 180M may obtain a vibration signal. In some embodiments, the bone conduction sensor 180M may obtain a vibration signal of a vibration bone of a human vocal part. The bone conduction sensor 180M may also be in contact with a human pulse, and receive a blood pressure beating signal. In some embodiments, the bone conduction sensor 180M may alternatively be disposed in a headset to form a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be used for an incoming call vibration prompt, or may be used for a touch vibration feedback. For example, touch operations performed on different applications (for example, a photographing application and an audio playing application) may correspond to different vibration feedback effects. The motor 191 may also correspond to different vibration feedback effects for touch operations performed on different areas of the display screen 194. Different application scenarios (for example, time reminding, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 can support one or N SIM card interfaces, where N is a positive integer greater than 1. The SIM card interface 195 can support a nano-SIM card, a micro-SIM card, a SIM card, and the like. A plurality of cards can be simultaneously inserted into a same SIM card interface 195. The plurality of cards may be of a same type or of different types. The SIM card interface 195 may also be compatible with different types of SIM cards. The SIM card interface 195 may also be compatible with an external memory card. The electronic device 100 interacts with a network by using the SIM card, to implement a call function, a data communication function, and the like. In some embodiments, the electronic device 100 uses eSIM, namely, an embedded SIM card. The eSIM card may be embedded into the electronic device 100 and cannot be separated from the electronic device 100.

A split-screen display control method provided in an embodiment of this application is described below in detail based on the electronic device 100 in FIG. 1 with reference to the accompanying drawings.

In some application scenarios of this application, when the foldable display screen is in a folded state, the electronic device may display an interface of a first application (for example, an interface of a gallery application) on a screen A of the foldable display screen. A screen B may be turned off. In an implementation, other interface elements (for example, a date and time) may be displayed on the screen B. If the electronic device receives an unfolding operation performed by a user on the foldable display screen, in response to the unfolding operation, the foldable display screen may be switched from the folded state to an unfolded state, and the electronic device may display the application interface in all of a display area of the foldable display screen, and pop up a shortcut menu. The shortcut menu may include options of one or more related applications of the first application. The electronic device may receive an input operation (for example, tapping) performed by the user on the option of the related application. In response to the input operation (for example, tapping), the electronic device may display an interface of the first application and an interface of the related application on the foldable display screen in the unfolded state in split-screen mode. In this way, when the foldable display screen is switched from the folded state to the unfolded state, an operation portal for quickly implementing multi-application split-screen may be provided for the user, so that the user can conveniently use a multi-application split-screen function.

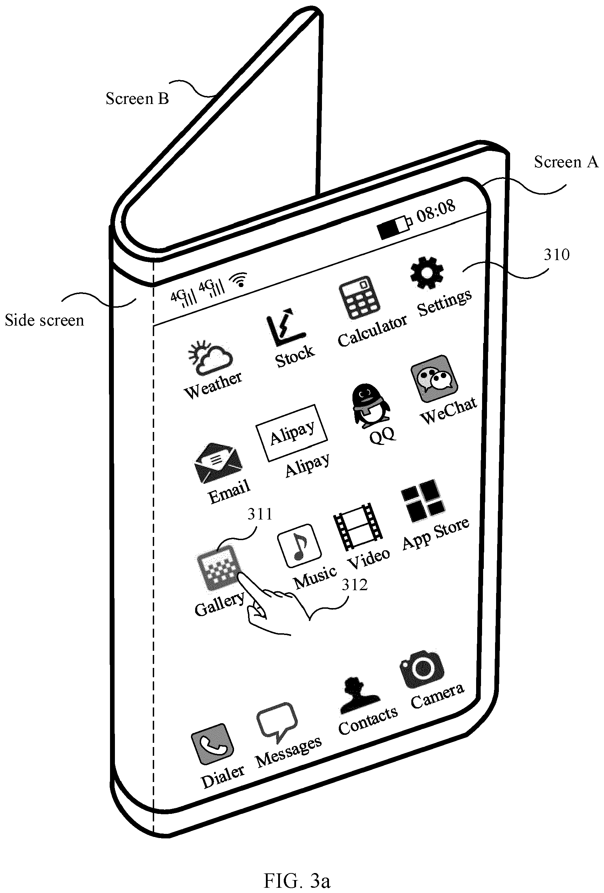

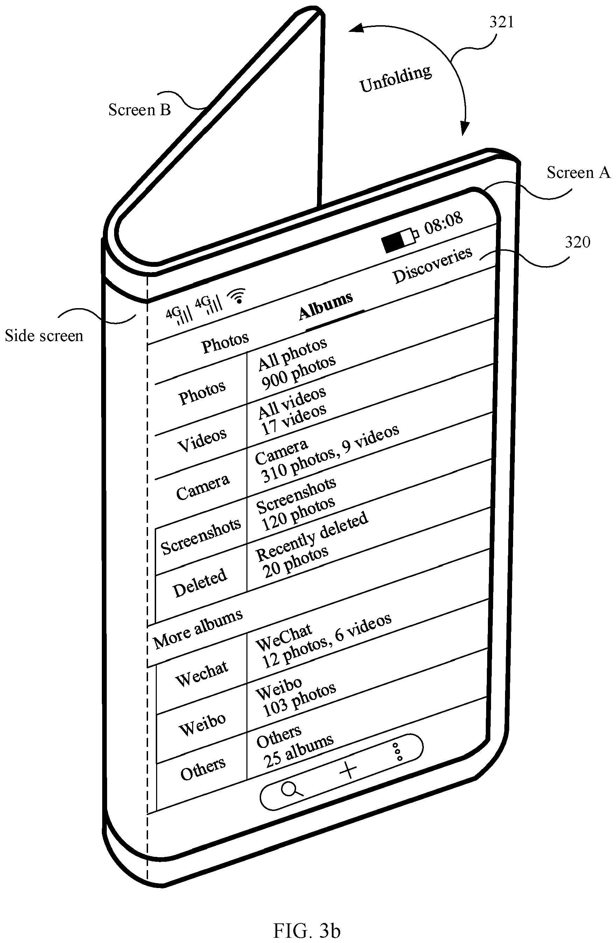

For example, as shown in FIG. 3a, the foldable display screen of the electronic device is in the folded state. In the folded state, the electronic device may display a home screen 310 on the screen A. The home screen 310 includes an option 311 of the gallery application and options of other applications (for example, weather, stock, calculator, settings, email, Alipay, QQ, WeChat, music, video, and AppGallery). The electronic device may receive an input operation 312 performed by the user on the option 311 of the gallery application. In response to the input operation 312 (for example, tapping), the electronic device may display, on the screen A, an interface 320 of the gallery application shown in FIG. 3b.

As shown in FIG. 3b, the foldable display screen of the electronic device is in the folded state. In the folded state, the electronic device may display the interface 320 of the gallery application on the screen A. The interface 320 of the gallery application may include one or more albums (for example, an "All photos" album, an "All videos" album, a "Camera" album, a "Screenshots" album, a "Recently deleted" album, a "WeChat" album, a "Weibo" album, and an "Others" album).

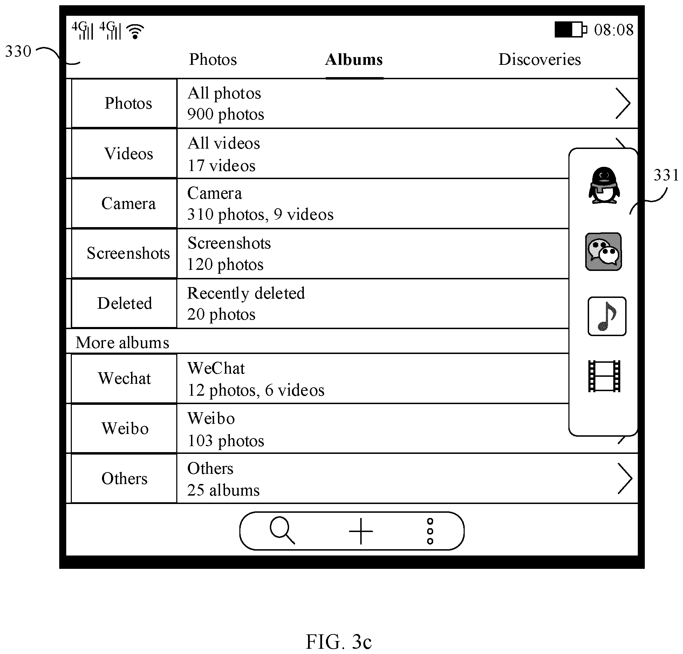

The electronic device may receive an unfolding operation 321 performed by the user on the foldable screen. In response to the unfolding operation 321, the electronic device may display, on the foldable display screen, an interface 330 of the gallery application shown in FIG. 3c, and display a shortcut menu 331 of the gallery application on the foldable screen. The interface 330 of the gallery application may be displayed in full screen mode, or may be displayed in a window. The shortcut menu 331 may include one or more options (for example, an application option) associated with the gallery application.

The one or more options may be options of one or more applications associated with the gallery application. The application associated with the gallery application may include one or more of an application displayed in split-screen mode with the gallery application, a user-defined related application, and a default related application in a system. The application displayed in split-screen mode with the gallery application is one or more applications displayed in split-screen mode with the gallery application by the electronic device on the foldable display screen before the electronic device receives the unfolding operation 321 performed by the user. The user-defined related application is an application added to the shortcut menu by the electronic device after receiving input from the user. The preset related application in the system is an application that is set in the shortcut menu 331 by default in the system of the electronic device.

In some embodiments, the shortcut menu may further include an option of an application previously displayed by the electronic device. For example, before the electronic device displays, on the screen A, the interface 320 of the gallery application shown in FIG. 3b, the electronic device displays an interface of the Alipay application on the foldable display screen. After the electronic device receives the unfolding operation 321 performed by the user, the electronic device may display an option of the Alipay application in the shortcut menu displayed on the foldable display screen. After the electronic device receives a touch operation performed by the user on the option of the Alipay application, in response to the touch operation performed on the option of the Alipay application, the electronic device may display a user interface of the gallery application and a user interface of the Alipay application in split-screen mode.

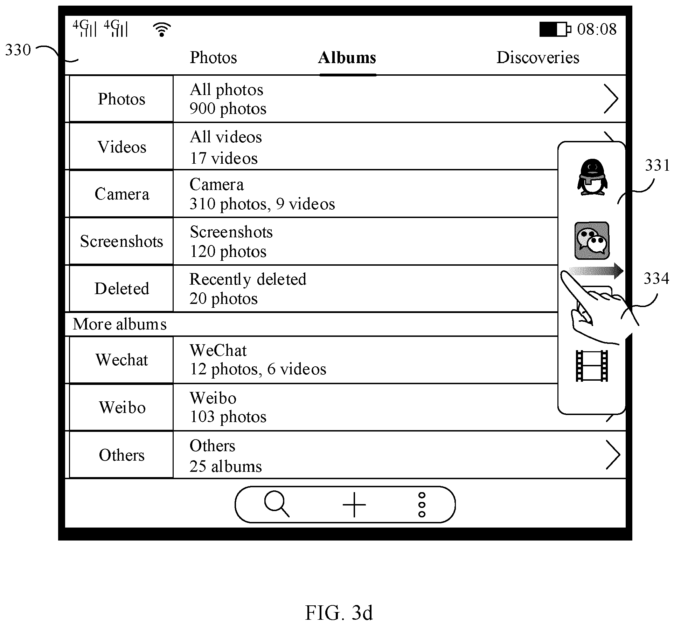

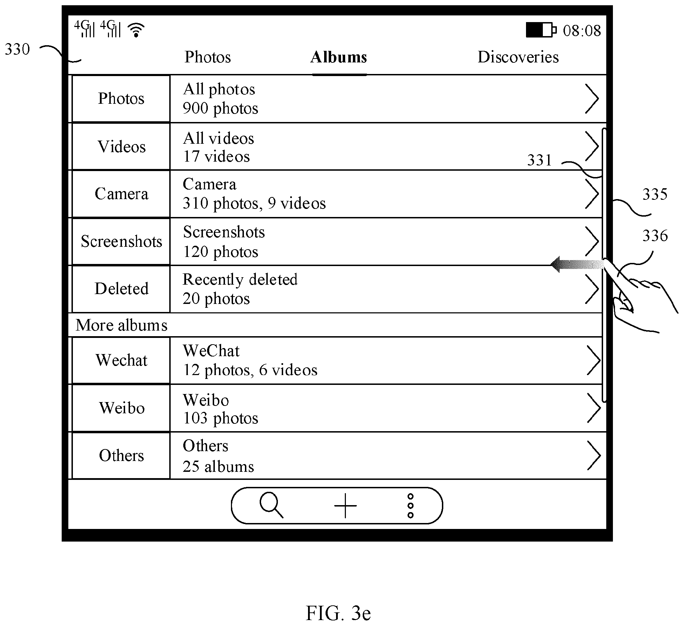

In some embodiments, as shown in FIG. 3c, the shortcut menu 331 may be displayed on a frame of the foldable display screen (for example, a right frame of the foldable display screen). As shown in FIG. 3d, the electronic device may receive a sliding operation 334 (for example, an operation of sliding towards an edge of the foldable display screen) performed by the user on the shortcut menu 331. In response to the sliding operation 334, the electronic device may hide the shortcut menu 331 on an edge 335 of the foldable display screen. In an implementation, after displaying the shortcut menu 331 for a period of time (for example, 10 seconds), the electronic device may hide the shortcut menu 331 on the edge 335 of the foldable display screen. As shown in FIG. 3e, when the shortcut menu 331 is hidden on the edge 335 of the foldable display screen, the electronic device may receive a sliding input operation 336 (for example, an operation of sliding from the edge of the foldable display screen to a screen center of the foldable display screen) performed by the user for the edge 335 of the foldable display screen. In response to the sliding input operation 336, the electronic device may display the shortcut menu 331 shown in FIG. 3c. In this way, when the user does not need to perform screen splitting, the shortcut menu 331 may be hidden on the edge of the foldable display screen. When the user needs to perform screen splitting, the electronic device may receive the sliding operation 336 performed by the user, and display the shortcut menu 331 in response to the sliding operation 336. This reduces a time in which an interface is shielded, thereby improving user experience.

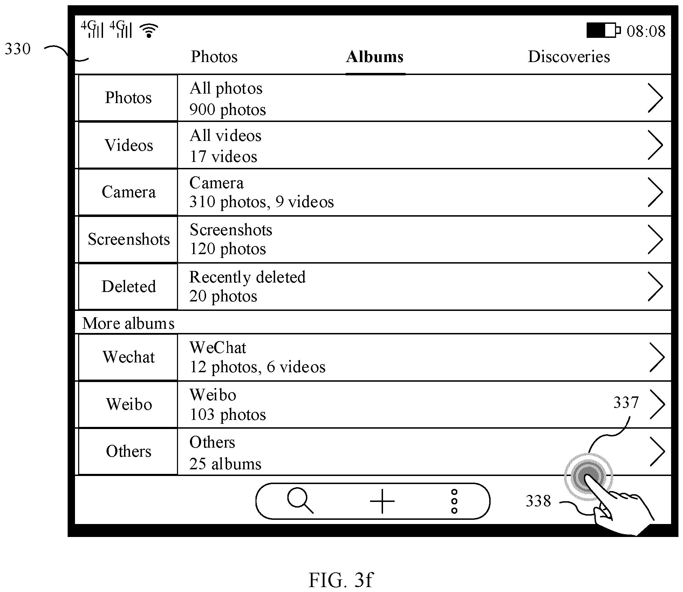

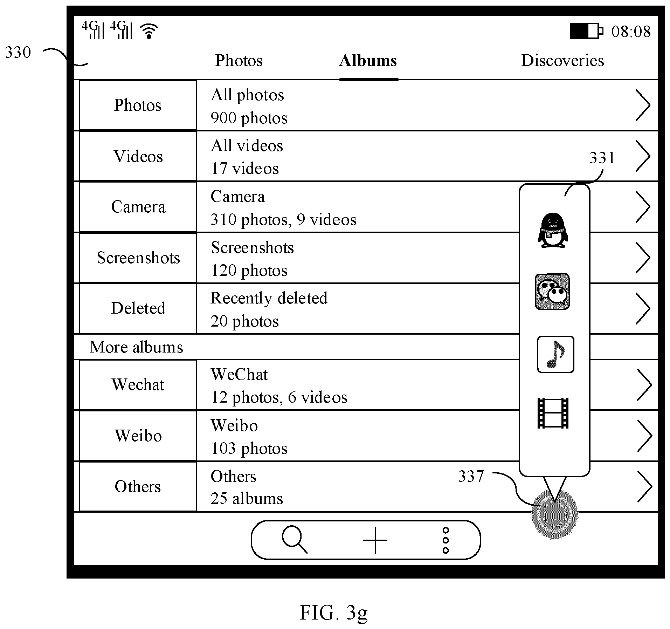

In some embodiments, in response to the unfolding operation 321, the electronic device may display the interface 330 of the gallery application in full screen mode, and display a prompt control. After the electronic device receives a touch operation performed by the user on the prompt control, the electronic device may display the shortcut menu 331 in response to the touch operation. As shown in FIG. 3f, in response to the unfolding operation 321, the electronic device may display the interface 330 in full screen mode, and display a prompt control 337. The electronic device may receive a touch operation 338 (for example, tapping) performed by the user on the prompt control 337. In response to the touch operation 338, the electronic device may display a menu 331 shown in FIG. 3g. The menu 331 includes one or more options.

In some other embodiments, in response to the unfolding operation 321, the electronic device may display the interface 330 of the gallery application in full screen mode without displaying the shortcut menu. In this case, when the electronic device detects a touch operation (for example, an operation of tapping a button on the interface 330) performed by the user on the interface 330 of the gallery application, the electronic device displays the shortcut menu 331 in response to the touch operation. In this way, the electronic device may prompt, based on a requirement of the user, the user with the shortcut menu for screen splitting, thereby improving use efficiency of the electronic device and improving user experience.

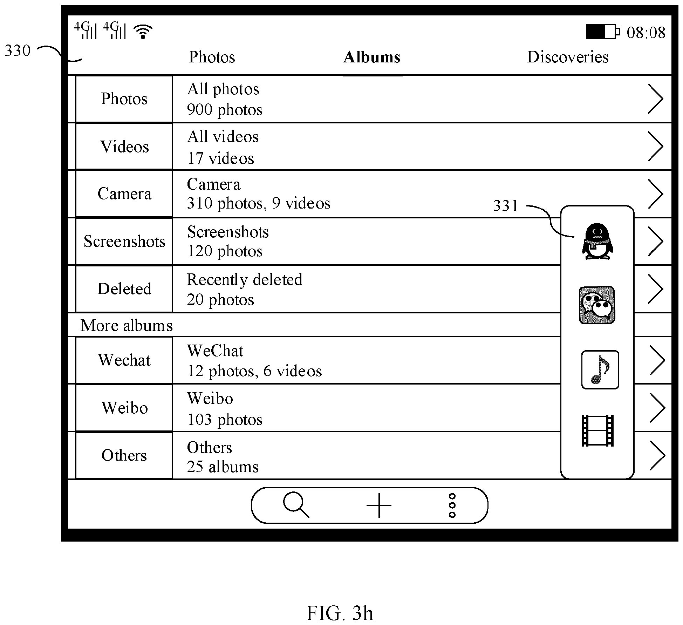

In some embodiments, as shown in FIG. 3h, the shortcut menu 331 may be displayed in a non-edge area of the foldable screen. In an implementation, after the electronic device displays the shortcut menu 331 for a period of time (for example, 10 seconds), the shortcut menu 331 may disappear from the foldable display screen. The shortcut menu 331 may instantaneously disappear, or a gradient effect may be used. For example, the shortcut menu 331 slowly disappears from clear to transparent and then to nothing. This is not limited herein. In this way, when the user does not need to perform a screen splitting operation, a time in which an application interface displayed on the foldable display screen is shielded by the shortcut menu can be reduced, thereby improving user experience.

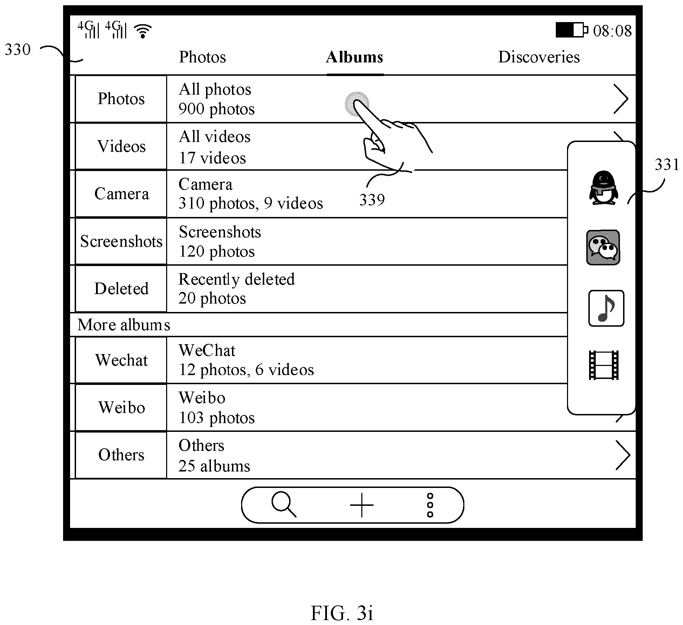

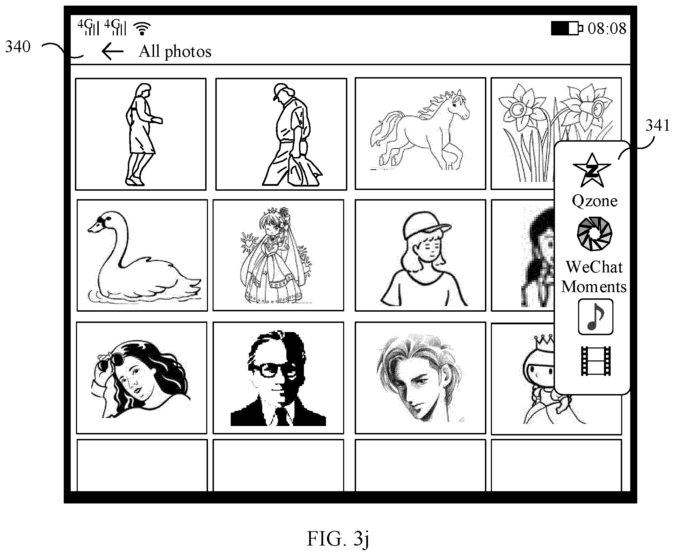

In some embodiments, the option in the shortcut menu varies with a user interface of the gallery application. For example, as shown in FIG. 3i, the electronic device may receive an input operation 339 (for example, tapping) performed by the user on an "All photos" album entry in the interface 330 of the gallery application. In response to the input operation 339, the electronic device may display, on the touchscreen in full screen mode, an "All photos" album interface 340 shown in FIG. 3j, and display a shortcut menu 341. In comparison with the shortcut menu 331, in the shortcut menu 341, an option of the QQ application and an option of WeChat Moments in the shortcut menu 331 are switched to an option of a Qzone interface in the QQ application and an option of Moments in the WeChat application. The electronic device may receive an input operation (for example, tapping) performed by the user on the option of Moments. In response to the input operation performed on the option of Moments, the electronic device may display a Moments interface in the WeChat application and an "All photos" album interface in split-screen mode. The "All photos" album interface displayed in split-screen mode is a user interface obtained after the "All photos" album interface 330 is scaled down.

In some embodiments, the shortcut menu (for example, the shortcut menu 331 or the shortcut menu 341) may further include a button for returning to a previous application. For example, before the electronic device displays the interface 330 of the gallery application in full screen mode, the electronic device displays a user interface of a Taobao application (that is, the user interface of the Taobao application is previously used). After the electronic device displays the interface 330 of the gallery application in full screen mode and displays the shortcut menu that includes the button for returning to a previous application, the electronic device may receive an input operation performed by the user on the button for returning to a previous application. In response to the input operation performed on the button for returning to a previous application, the electronic device may display the user interface of the Taobao application in full screen mode.

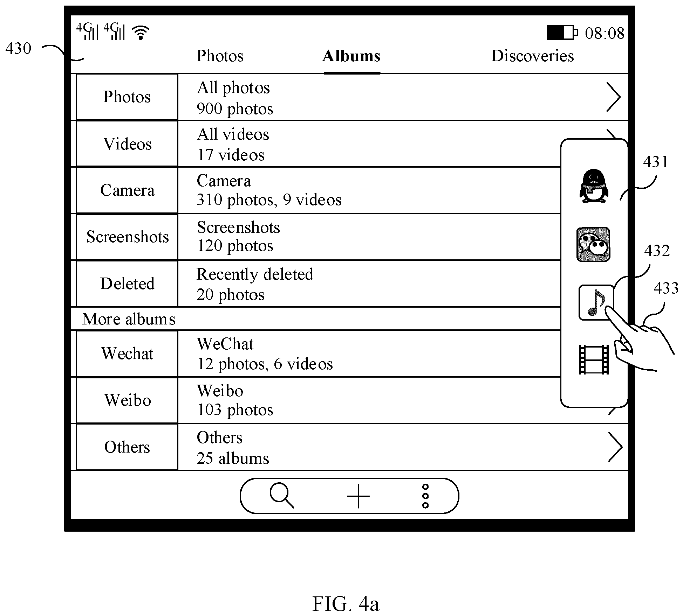

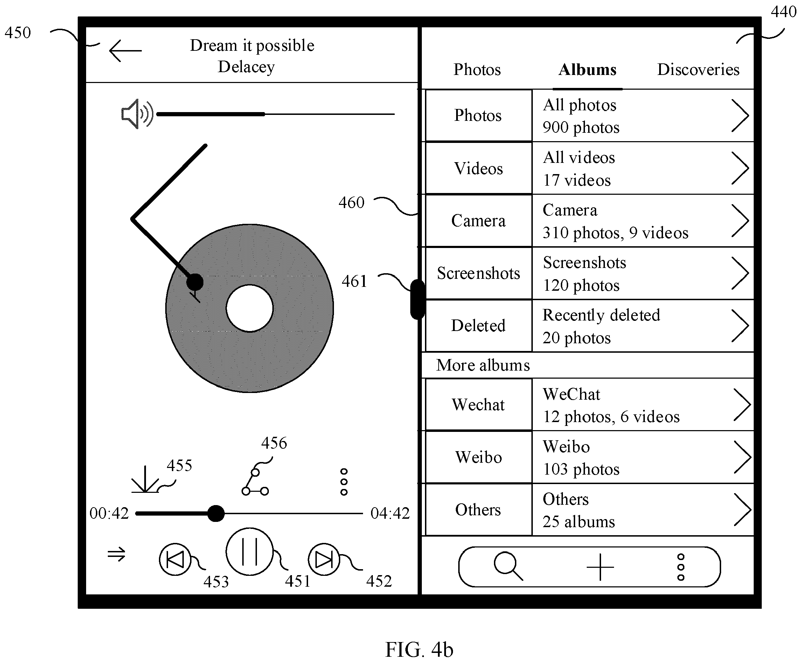

As shown in FIG. 4a, the electronic device displays an interface 430 of the gallery application and a shortcut menu 431. For detailed description of the interface 430 of the gallery application, refer to the description of the interface 330 of the gallery application in FIG. 3c. For detailed description of the shortcut menu 431, refer to the description of the shortcut menu 331 in FIG. 3c. As shown in FIG. 4a, options displayed in the shortcut menu 431 may include an option 432 of the music application, an option of the QQ application, an option of the WeChat application, an option of the video application, and the like. The electronic device may receive an input operation 433 (for example, tapping) performed by the user on the option 432 of the music application. In response to the input operation 433, the electronic device may display, on the foldable display screen in the unfolded state in split-screen mode, an interface 440 of the gallery application and an interface 450 of the music application shown in FIG. 4b. This is limited to that shown in FIG. 4b. Alternatively, the electronic device may display an interface of the gallery application and an interface of the music application on the foldable display screen in the unfolded state through horizontal screen splitting. This is not limited herein. The interface 440 of the gallery application is smaller than the interface 430 of the gallery application.

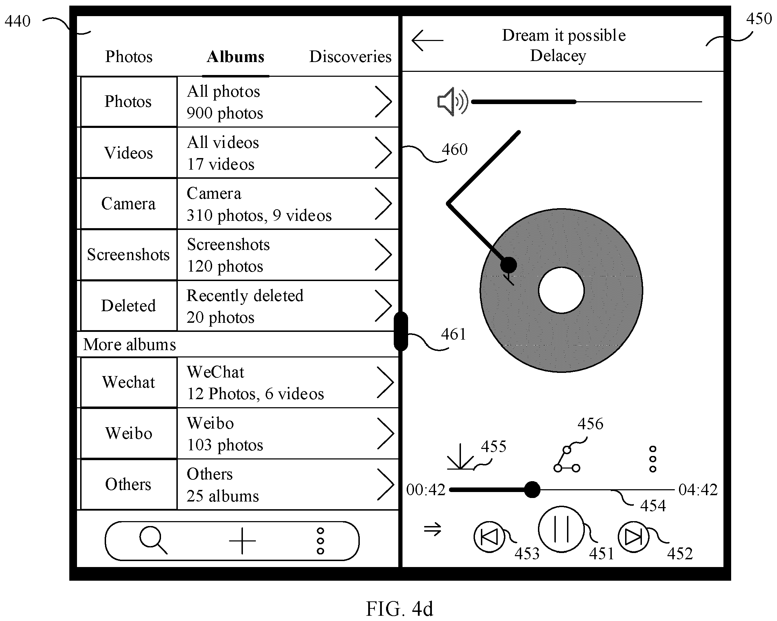

As shown in FIG. 4b, the electronic device may display the interface 440 of the gallery application and the interface 450 of the music application on the foldable display screen in the unfolded state through vertical screen splitting. The interface 440 of the gallery application may include one or more albums (for example, an "All photos" album, an "All videos" album, a "Camera" album, a "Screenshots" album, a "Recently deleted" album, a "WeChat" album, a "Weibo" album, and an "Others" album). The interface 450 of the music application may include controls such as a music play/pause button 451, a button 452 for switching to a next song, a button 453 for switching to a previous song, a music play progress bar 454, a music download button 455, and a music sharing button 456. The interface 440 of the gallery application and the interface 450 of the music application may be separated by a screen splitting line 460. Certainly, the screen splitting line 460 may not be displayed. For example, the electronic device may display the interface 440 of the gallery application in a display area, of the foldable display screen, on a right side of the screen splitting line 460, and the electronic device may display the interface 450 of the music application in left display area, of the foldable display screen, on a left side of the screen splitting line 460. In some embodiments, the screen splitting line 460 may be hidden (no longer displayed) within a predetermined time. For example, if the electronic device does not receive an input operation (for example, a touch and hold operation or a tap operation) performed by the user within the predetermined time, the screen splitting line 460 is no longer displayed. After the screen splitting line 460 is hidden, if the electronic device receives an input operation performed by the user on an interface in FIG. 4d, the screen splitting line 460 may be displayed again in response to the input operation. In this way, the screen splitting line 460 may be or may not be displayed based on a requirement of the user, thereby improving user experience.

In an optional implementation, the electronic device may receive an input operation performed by the user, and adjust, in response to the input operation performed by the user, display areas of interfaces of two or more applications displayed on the foldable display screen in the split-screen manner. For example, as shown in FIG. 4b, there may be an adjustment button 461 on the screen splitting line 460. The electronic device may receive an input operation (for example, an operation of pressing the adjustment button 461 by a finger to slide to the left or to the right) performed by the user on the adjustment button 461, and the electronic device may correspondingly adjust a position of the screen splitting line 460 on the screen A. For example, when the screen splitting line 460 moves to the right, the interface 450 of the music application is displayed in a larger area on the foldable display screen in the unfolded state, and more content can be displayed on the interface 450 of the music application; and the interface 440 of the gallery application is displayed in a smaller area on the foldable display screen in the unfolded state, and less content can be displayed on the interface 440 of the gallery application. In this way, when interfaces of two or more applications are displayed on the foldable display screen in split-screen mode, the electronic device may adjust, based on a requirement of the user, sizes of display areas of the interfaces of the two or more applications displayed in split-screen mode, thereby improving user experience.

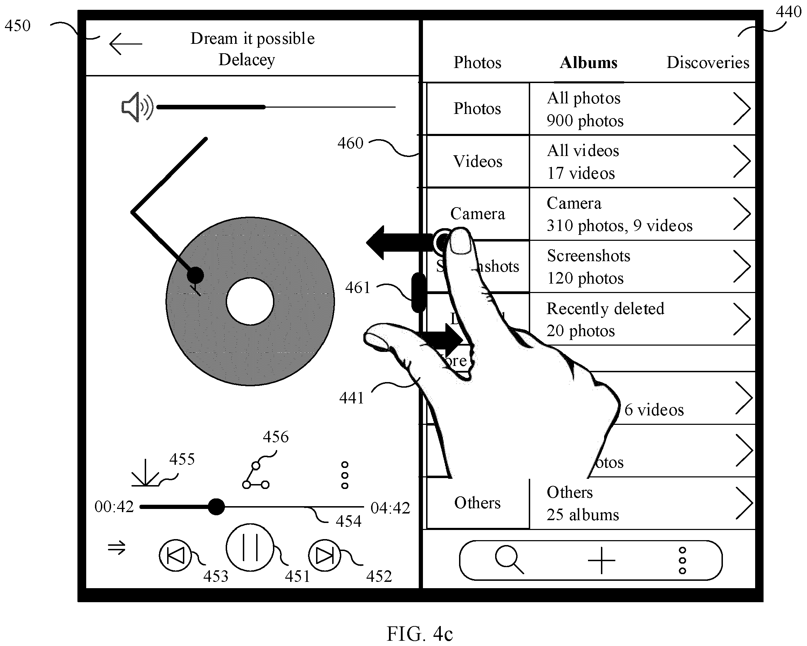

In an implementation, when interfaces of two or more applications are displayed on the foldable display screen in the unfolded state in split-screen mode, the electronic device may receive a display area switching input operation performed by the user for the interfaces of the two or more applications. In response to the display area switching input operation, the electronic device may switch display positions of the interfaces of the two or more applications on the foldable display screen. For example, as shown in FIG. 4c, on the foldable display screen in the unfolded state, the electronic device may display the interface 440 of the gallery application on the right side of the screen splitting line 460, and display the interface 450 of the music application on the left side of the screen splitting line 460. The electronic device may receive an input operation 441 performed by the user. In response to the input operation 441, the electronic device may switch display positions of the interface 440 of the gallery application and the interface 450 of the music application on the foldable display screen. For example, the input operation 441 may be that an index finger of the user touches the interface 440 of the gallery application, and a thumb touches the interface 450 of the music application, and then the two fingers slide towards each other. For how the electronic device switches the display positions of the interface 440 of the gallery application and the interface 450 of the music application, refer to FIG. 4d. As shown in FIG. 4d, on the foldable display screen in the unfolded state, the electronic device may display the interface 440 of the gallery application on the left side of the screen splitting line 460, and display the interface 450 of the music application on the right side of the screen splitting line 460.

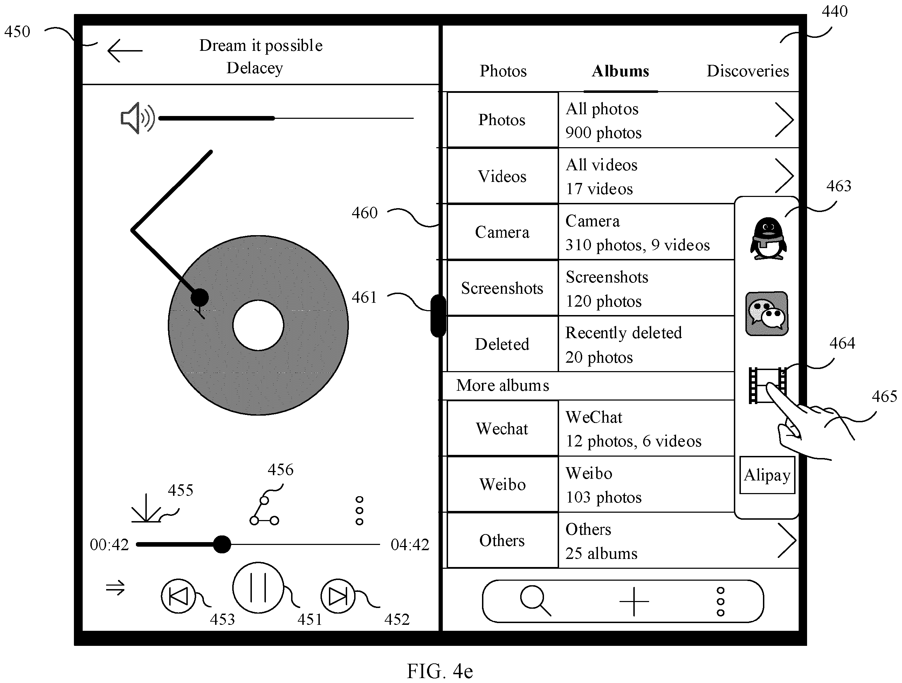

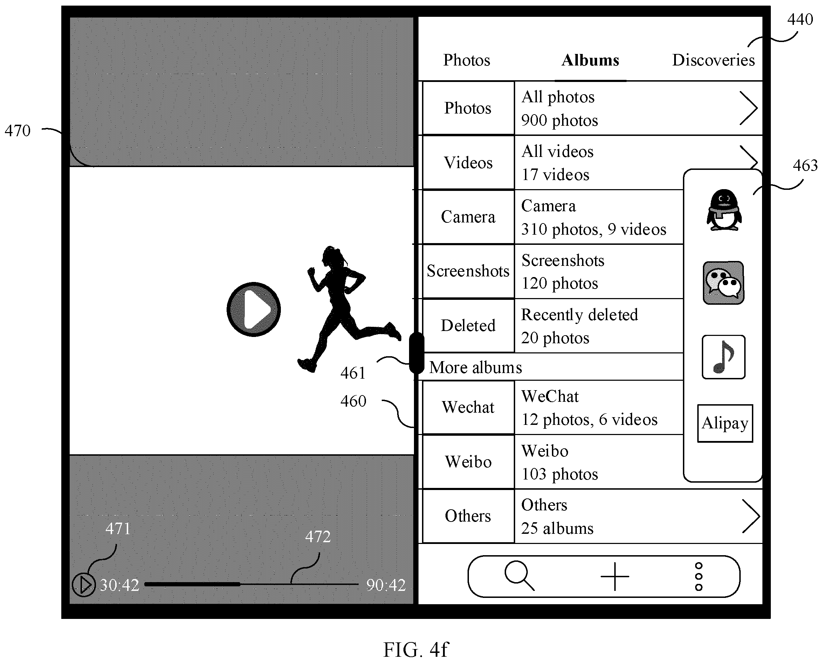

In an implementation, when interfaces of two or more applications are displayed on the foldable display screen in the unfolded state in split-screen mode, the electronic device may further display a shortcut menu. For example, as shown in FIG. 4e, when displaying the interface 450 of the music application and the interface 440 of the gallery application in split-screen mode, the electronic device may further display a shortcut menu 463. The shortcut menu 463 includes one or more options, for example, options of one or more applications (for example, the QQ application, the WeChat application, the video application, and the Alipay application). The electronic device may receive an input operation 465 (for example, tapping) performed by the user on an option 464 of the video application in the shortcut menu. In response to the input operation 465, the electronic device may replace the interface 450 of the music application or the interface 440 of the gallery application with an interface 470 of the video application. For example, the interface 450 of the music application is replaced with the interface 470 of the video application. As shown in FIG. 4f, in response to the input operation 465, the electronic device displays the interface 440 of the gallery application and the interface 470 of the video application on the foldable display screen in split-screen mode. In this way, an interface of an application displayed on the foldable display screen in split-screen mode may be switched based on a requirement of the user, thereby improving user experience.

In some other application scenarios of this application, if interfaces of two or more applications are displayed on the foldable display screen, of the electronic device, in the unfolded state in split-screen mode, when the foldable display screen is switched from the unfolded state to the folded state, the electronic device may display, on the screen A, an application interface of the first application displayed in split-screen mode, display a corresponding application option of another application interface on a side screen, and display a screen splitting button and a clear button on the side screen. When the user taps an application option of a second application on the side screen, the electronic device may display an application option of the first application on the side screen, and display an application interface of the second application on the screen A. When the user taps the screen splitting button, the electronic device may display the interfaces of the two or more applications on the screen A in split-screen mode. When the user taps the clear button, the electronic device may clear content displayed on the side screen. In this way, when the foldable display screen is switched from the unfolded state to the folded state, the electronic device may quickly continue to implement multi-application split-screen display or quickly switch an interface of an application displayed on the screen A of the foldable display screen based on a requirement of the user, thereby improving user experience.

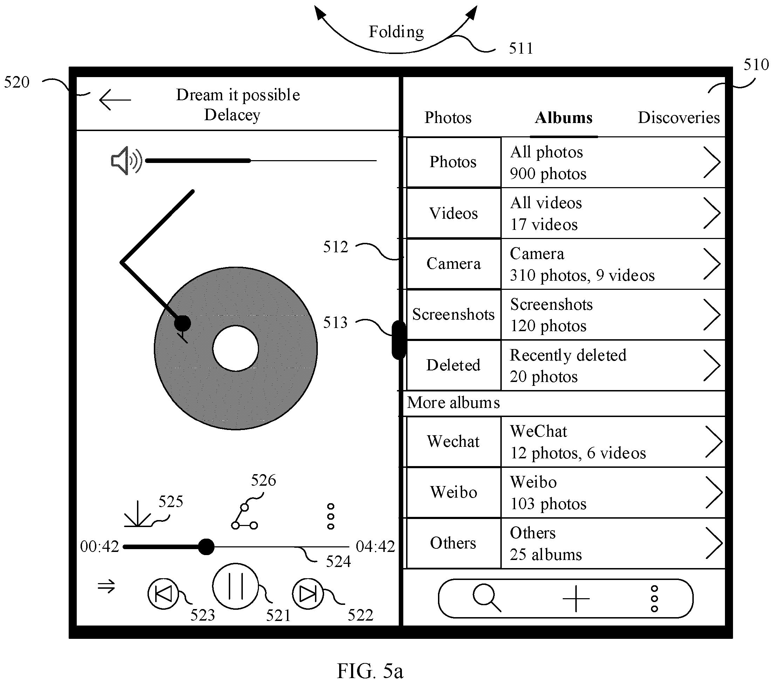

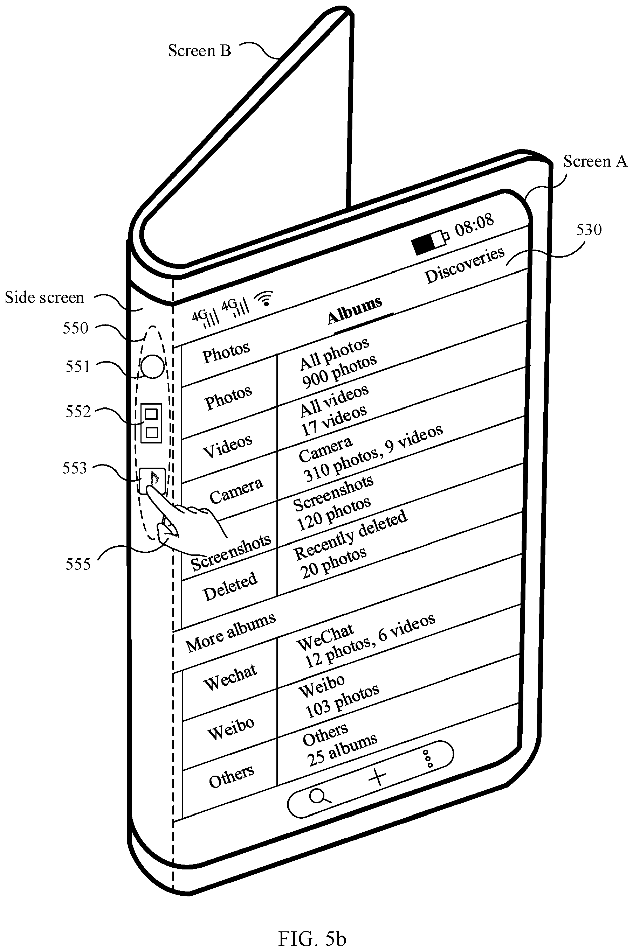

For example, as shown in FIG. 5a, the electronic device may display two or more applications on the foldable display screen in the unfolded state in split-screen mode. As shown in FIG. 5a, the electronic device may display an interface 510 of the music application and an interface 520 of the gallery application on the foldable display screen in the unfolded state in split-screen mode. The interface 510 of the music application may be displayed in a display area, of the foldable display screen, on a left side of a screen splitting line 512, and the interface 520 of the gallery application may be displayed in a display area, of the foldable display screen, on a right side of the screen splitting line 512. The electronic device may receive a folding operation 511 performed by the user. In response to the folding operation 511 performed by the user, the electronic device may switch the foldable display screen from the unfolded state to the folded state, display an interface of the gallery application on the screen A of the foldable display screen in the folded state, and display a screen splitting navigation bar on the side screen of the foldable display screen. The screen splitting navigation bar may include an option of the music application, a screen splitting button, and a clear button. After the foldable display screen is switched from the unfolded state to the folded state, for content displayed on the screen A and the side screen of the foldable display screen, refer to FIG. 5b.

As shown in FIG. 5b, when the foldable display screen is in the folded state, the electronic device may display an interface 530 of the gallery application on the screen A of the foldable display screen, and display a screen splitting navigation bar 550 on the side screen of the foldable display screen. The screen splitting navigation bar 550 includes a clear button 551, a screen splitting button 552, and an option 553 of the music application. The interface 530 of the gallery application may include one or more albums (for example, an "All photos" album, an "All videos" album, a "Camera" album, a "Screenshots" album, a "Recently deleted" album, a "WeChat" album, a "Weibo" album, and an "Others" album). In this case, the screen B of the foldable display screen may not be configured to display any interface content. Certainly, in some other embodiments, the screen B may alternatively be configured to display another interface element that is output by the system of the electronic device and that is different from the interfaces of the two or more applications displayed in split-screen mode in FIG. 5a. That the screen B is not configured to display any interface content may mean that the screen B is in a black screen state, and is not configured to display any interface element. Alternatively, that the screen B is not configured to display any interface content may mean that the screen B is in a working state with low power consumption, and the screen B is not configured to display any interface content, but may be configured to: receive a user operation, and display corresponding interface content based on the user operation.

The electronic device may further display, on the side screen of the foldable display screen, the options of the one or more applications associated with the gallery application. The application associated with the gallery application may include one or more of the application displayed in split-screen mode with the gallery application, the user-defined related application, and the default related application in the system. For details, refer to the text description of the application associated with the gallery application in the embodiment shown in FIG. 3b. Details are not described herein. For example, an option of the WeChat application may be further displayed on the side screen of the foldable display screen. The electronic device may receive an input operation (for example, tapping) performed by the user on the option of the WeChat application on the side screen. In response to the input operation performed on the option of the WeChat application, the electronic device may display an interface of the WeChat application on the screen A of the foldable display screen.

The following describes the option of the application, the screen splitting button, and the clear button in the screen splitting navigation bar in this embodiment of this application in detail.

### (1) Option of the application in the screen splitting navigation bar

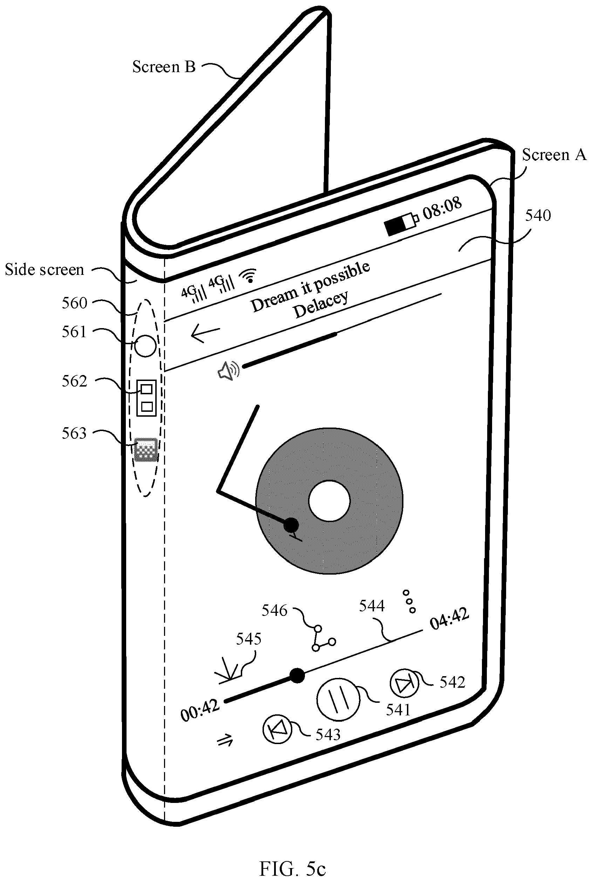

As shown in FIG. 5b, the electronic device may receive an input operation 555 (for example, tapping) performed by the user on the option 553 of the music application in the screen splitting navigation bar 550 on the side screen. In response to the input operation 555, the electronic device may display an interface of the music application on the screen A of the foldable display screen, may no longer display an originally displayed interface of an album application, may replace the option of the gallery application with the option of the music application, and display the option of the music application in the screen splitting navigation bar on the side screen. After the electronic device receives the input operation 555 (for example, tapping) performed by the user on the option 553 of the music application, for interface content output by the electronic device on the foldable display screen, refer to FIG. 5c.

As shown in FIG. 5c, the electronic device may display an interface 540 of the music application on the screen A of the foldable display screen, and display a screen splitting navigation bar 560 on the side screen of the foldable display screen. The screen splitting navigation bar 560 may include a clear button 561, a screen splitting button 562, and an option 563 of the music application. The interface 540 of the music application may include controls such as a music play/pause button 541, a button 542 for switching to a next song, a button 543 for switching to a previous song, a music play progress bar 544, a music download button 545, and a music sharing button 546.

In an optional implementation, the electronic device receives an input operation 555 (for example, tapping) performed by the user on the option 553 of the music application in the screen splitting navigation bar 550 on the side screen. In response to the input operation 555 (for example, tapping), the electronic device may display an interface of the music application on the screen A of the foldable display screen, and does not display content on the side screen.

### (2) Screen splitting button in the screen splitting navigation bar

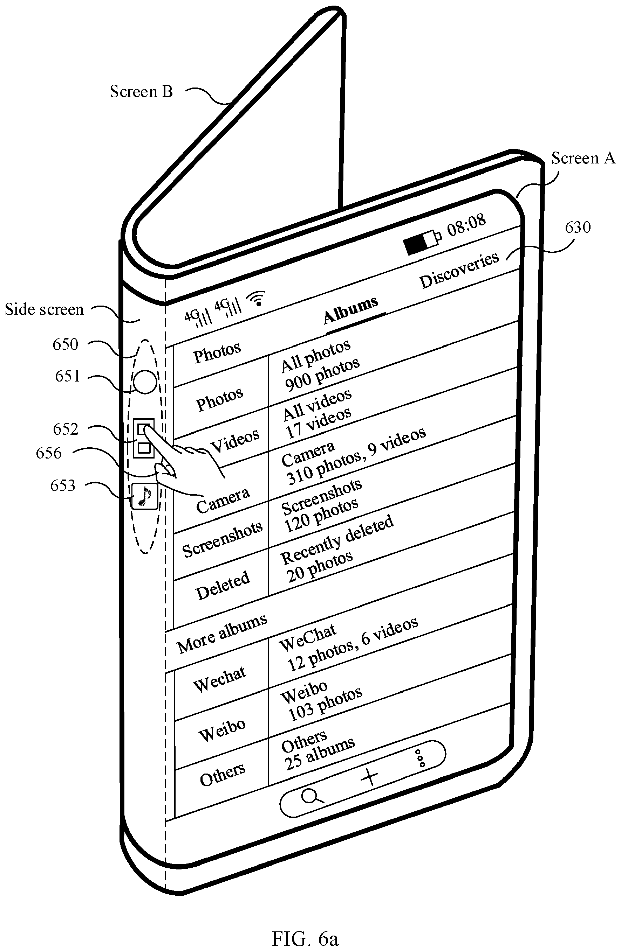

As shown in FIG. 6a, the foldable display screen is in the folded state, and the electronic device may display an interface 630 of the gallery application on the screen A of the foldable display screen, and display a screen splitting navigation bar 650 on the side screen of the foldable display screen. The screen splitting navigation bar 650 may include a clear button 651, a screen splitting button 652, and an option 653 of the music application. The interface 630 of the gallery application may include one or more albums. The screen B of the foldable display screen may not be configured to display any interface content, or may be configured to display other interface content output by the system of the electronic device. The other interface content may be interface content (for example, a time display interface) different from interfaces of two or more applications displayed in split-screen mode before a folding operation performed by the user is received. That the screen B is not configured to display any interface content may mean that the screen B is in the black screen state, does not respond to any operation performed by the user, and is not configured to display any interface element.

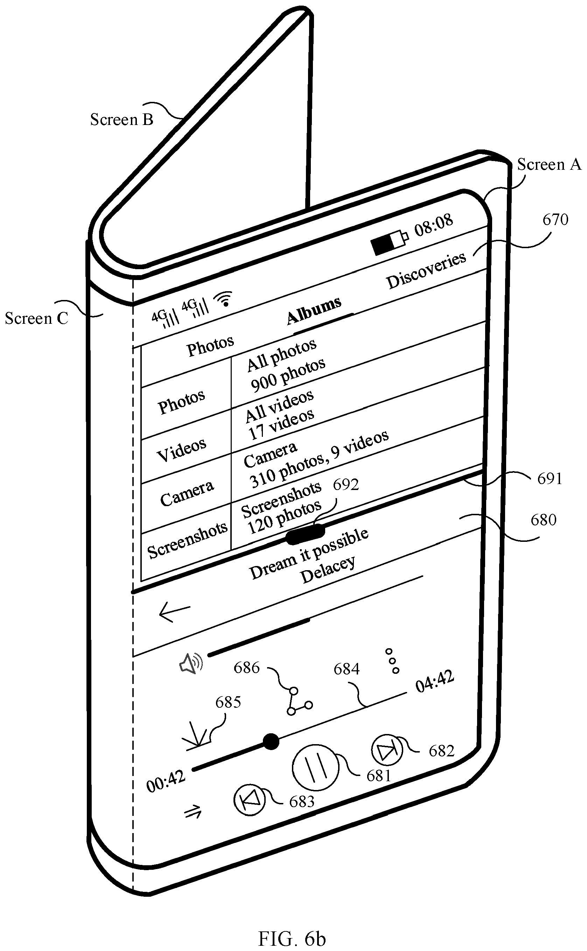

The electronic device may receive an input operation 656 (for example, tapping) performed by the user on the screen splitting button 652. In response to the input operation 656, the electronic device may display an interface of the gallery application and an interface of the music application on the screen A of the foldable display screen in split-screen mode. For the interface of the gallery application and the interface of the music application that are displayed by the electronic device on the screen A of the foldable display screen in split-screen mode, refer to FIG. 6b.

As shown in FIG. 6b, the electronic device may display an interface 670 of the gallery application and an interface 680 of the music application on the screen A of the foldable display screen through horizontal screen splitting. The interface 670 of the gallery application may be displayed above the interface 680 of the music application, or the interface 670 of the gallery application may be displayed below the interface 680 of the music application. The interface 680 of the music application may include controls such as a music play/pause button 681, a button 682 for switching to a next song, a button 683 for switching to a previous song, a music play progress bar 684, a music download button 685, and a music sharing button 686.

The interface 670 of the gallery application and the interface 680 of the music application may be separated by a screen splitting line 691. For example, the interface 670 of the gallery application may be displayed above the screen splitting line 691, and the interface 680 of the music application may be displayed below the screen splitting line 691. There may be an adjustment button 692 on the screen splitting line 691. The electronic device may receive an input operation (for example, an operation of pressing the adjustment button 692 by a finger to slide upwards or downwards) performed by the user on the adjustment button 692, and the electronic device may correspondingly adjust a position of the screen splitting line 691 on the screen A. For example, when the screen splitting line 691 moves upwards, the interface 680 of the music application is displayed in a larger area on the screen A, and more content can be displayed on the interface 680 of the music application; and the interface 670 of the gallery application is displayed in a smaller area on the screen A, and less content is displayed on the interface 670 of the gallery application. The electronic device may receive a sliding operation (for example, an operation of sliding upwards by a finger) performed by the user on the interface 670 of the gallery application. In response to the sliding operation (for example, the operation of sliding upwards by the finger), the electronic device may update and display, on the interface 670 of the gallery application, content that is not displayed before the sliding operation is received.

### (3) Clear button in the screen splitting navigation bar

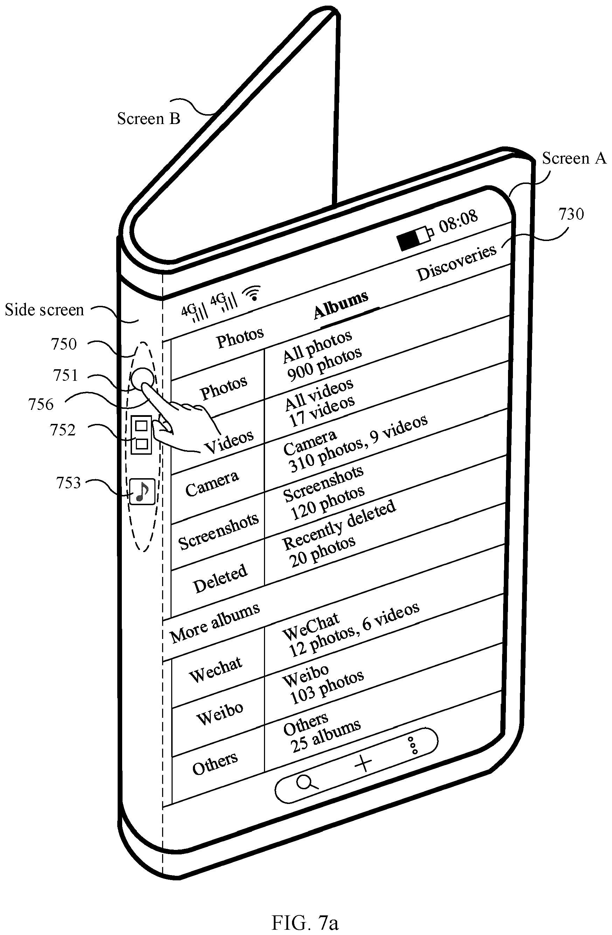

As shown in FIG. 7a, when the foldable display screen is switched from the unfolded state in which interfaces of two or more applications are displayed in split-screen mode to the folded state, the electronic device may display an interface 730 of the gallery application on the screen A of the foldable display screen, and display a screen splitting navigation bar 750 on the side screen of the foldable display screen. The screen splitting navigation bar 750 may include a clear button 751, a screen splitting button 752, and an option 753 of the music application. The interface 730 of the gallery application may include one or more albums (for example, an "All photos" album, an "All videos" album, a "Camera" album, a "Screenshots" album, a "Recently deleted" album, a "WeChat" album, a "Weibo album", and an "Others" album).

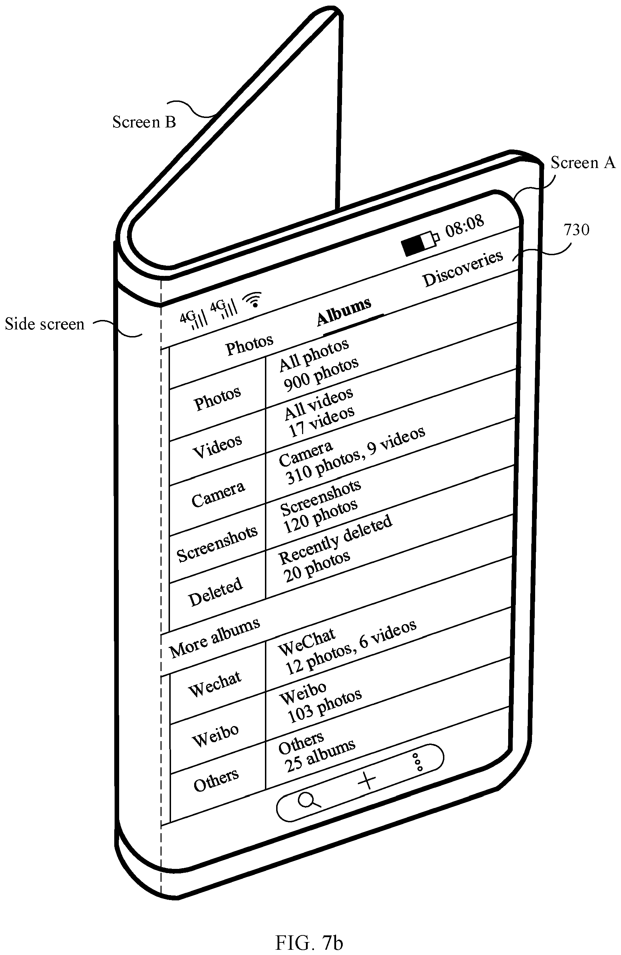

The electronic device may receive an input operation 756 (for example, tapping) performed by the user on the clear button 751. In response to the input operation 756 (for example, tapping), the electronic device may clear the side screen, that is, does not display the screen splitting navigation bar 750 on the side screen. After the electronic device clears the side screen, for content displayed on the foldable display screen, refer to FIG. 7b. As shown in FIG. 7b, the electronic device may display the interface 730 of the gallery application on the screen A of the foldable display screen, and does not display the screen splitting navigation bar on the side screen.

In this embodiment of this application, when the foldable display screen of the electronic device is in the folded state shown in FIG. 7b, and the interface 730 of the gallery application is displayed, the electronic device may receive the unfolding operation 321 again. In response to the unfolding operation 321, the electronic device may again switch the foldable display screen to the unfolded state shown in FIG. 3c, and the electronic device may display, on the foldable display screen in full screen mode, the interface 330 of the gallery application shown in FIG. 3c, and display the shortcut menu shown in FIG. 3c.

In some other application scenarios of this application, when two or more applications are displayed on the foldable display screen in the unfolded state in split-screen mode, if the foldable display screen is switched from the unfolded state to the folded state, the electronic device may display, on the screen A of the foldable display screen in the folded state, a last interface used by the user, display a corresponding application option of another application interface on a side screen, and display a screen splitting button and a clear button on the side screen. The last interface used by the user is a last interface operated by the user before the electronic device receives a folding operation performed by the user. In this way, when the foldable display screen is switched from the unfolded state to the folded state, an application interface currently used by the user may be displayed on the screen A, to ensure that after the foldable display screen is switched from the unfolded state to the folded state, the user may continue to use the application interface on which an operation is not completed. This improves user experience.

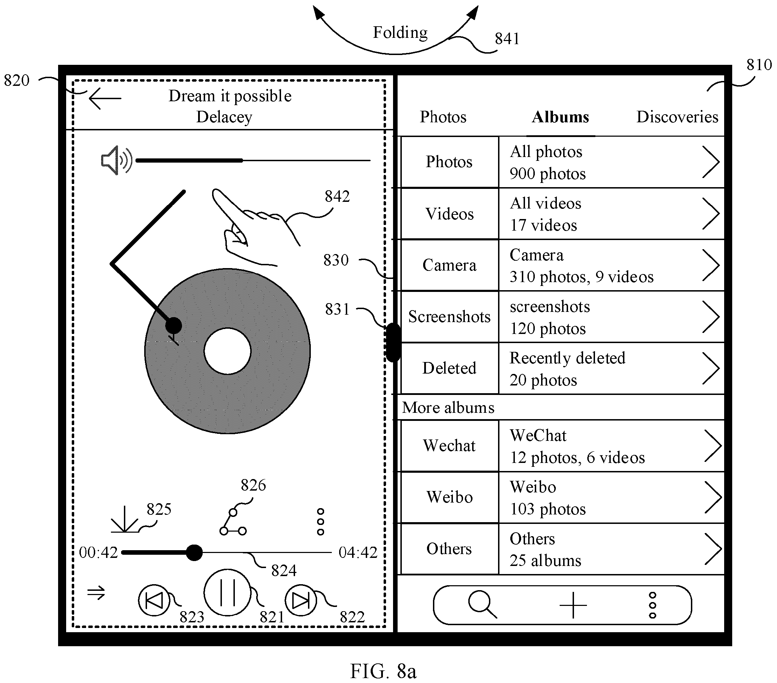

For example, as shown in FIG. 8a, when the foldable display screen is in the unfolded state, the electronic device may display an interface 810 of the gallery application and an interface 820 of the music application on the foldable display screen in split-screen mode. For example, the interface 810 of the gallery application may be displayed on a right side of the interface 820 of the music application. The interface 810 of the gallery application may include one or more albums (for example, an "All photos" album, an "All videos" album, a "Camera" album, a "Screenshots" album, a "Recently deleted" album, a "WeChat" album, a "Weibo" album, and an "Others" album). The interface 820 of the music application may include controls such as a music play/pause button 821, a button 822 for switching to a next song, a button 823 for switching to a previous song, a music play progress bar 824, a music download button 825, and a music sharing button 826.

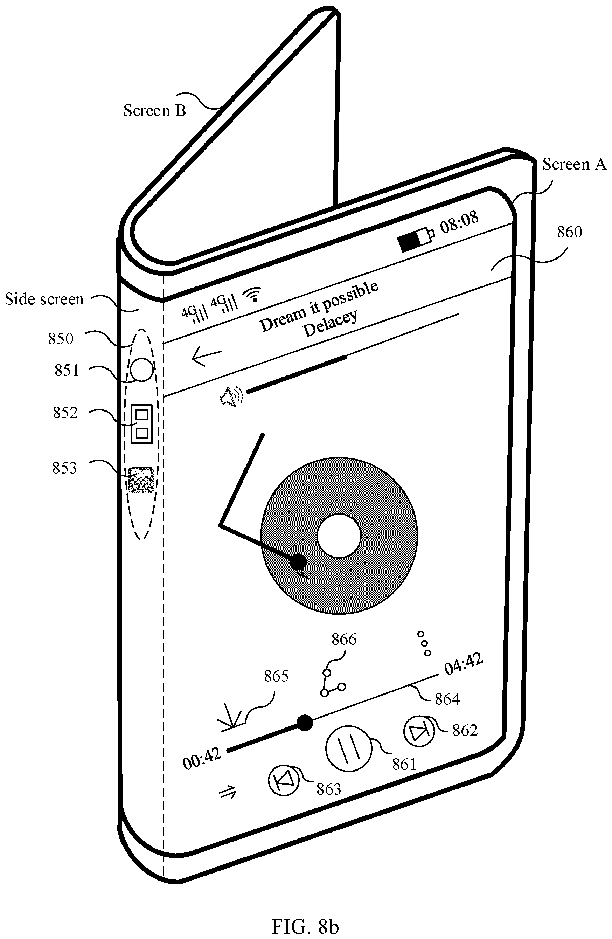

When the electronic device receives an input operation 842 performed by the user on the interface 820 of the music application, the electronic device may further receive a folding operation 841 performed by the user on the foldable display screen. In response to the folding operation 841 performed by the user on the foldable display screen, the foldable display screen may be switched from the unfolded state to the folded state shown in FIG. 8b.

As shown in FIG. 8b, the electronic device may display an interface 860 of the music application on the screen A of the foldable display screen, and display a screen splitting navigation bar 850 on the side screen of the foldable display screen. The screen splitting navigation bar 850 may include a clear button 851, a screen splitting button 852, and an option 853 of the music application.

In some other application scenarios of this application, for a viewing effect of the user, it is suitable to display application interfaces of some list-type applications (namely, play interfaces of non-video applications and interfaces of non-game applications) through vertical screen splitting when the foldable display screen is in the unfolded state. Therefore, if interfaces of two or more list-type applications are displayed on the screen A of the foldable display screen in the folded state in split-screen mode, when the foldable display screen is switched from the folded state to the unfolded state, the electronic device may display the interfaces of the two or more list-type applications on the foldable display screen in the unfolded state through vertical screen splitting.

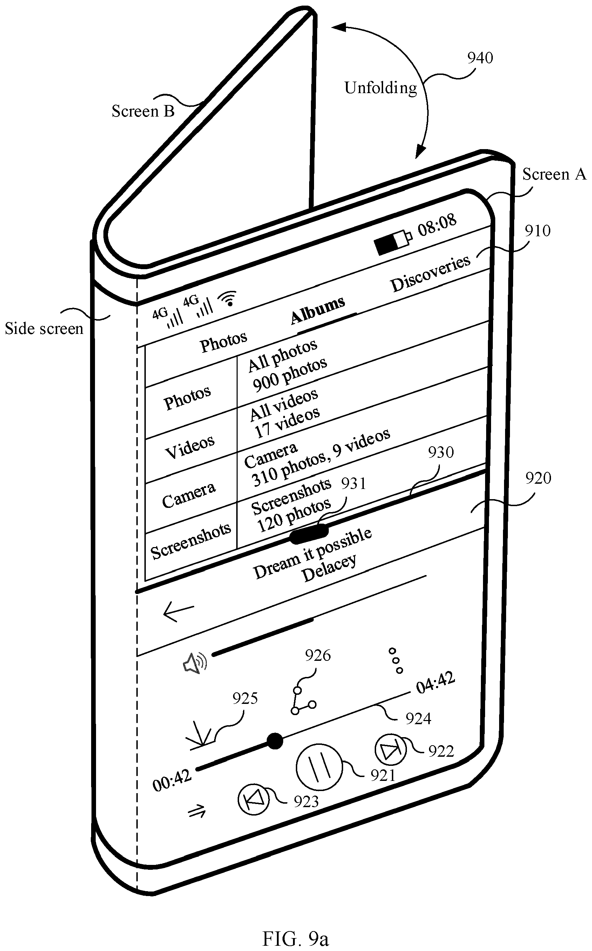

For example, as shown in FIG. 9a, when the foldable display screen is in the folded state, the electronic device may display interfaces of two or more applications on the screen A of the foldable display screen through horizontal screen splitting. In an implementation, the electronic device may alternatively display interfaces of two or more applications on the screen A through vertical screen splitting. For example, interfaces of two or more applications are displayed on the screen A through horizontal screen splitting. In this case, the electronic device may display an interface 910 of the gallery application and an interface 920 of the music application on the screen A through horizontal screen splitting. The interface 910 of the gallery application may be displayed above the interface 920 of the music application. This is not limited to that shown in FIG. 9a. Alternatively, the interface 910 of the gallery application may be displayed below the interface 920 of the music application. This is not limited herein. The interface 910 of the gallery application may include one or more albums. The interface 920 of the music application may include controls such as a music play/pause button 921, a button 922 for switching to a next song, a button 923 for switching to a previous song, a music play progress bar 924, a music download button 925, and a music sharing button 926. The interface 910 of the gallery application and the interface 920 of the music application may be separated by a screen splitting line 930. For example, the interface 910 of the gallery application may be displayed above the screen splitting line 930, and the interface 920 of the music application may be displayed below the screen splitting line 930. There may be an adjustment button 931 on the screen splitting line 930.

The electronic device may receive an input operation (for example, an operation of pressing the adjustment button 931 by a finger to slide upwards or downwards) performed by the user on the adjustment button 931, and the electronic device may correspondingly adjust a position of the screen splitting line 930 on the screen A. For example, when the screen splitting line 930 moves upwards, the interface 920 of the music application is displayed in a larger area on the screen A, and more content can be displayed on the interface 920 of the music application; and the interface 910 of the gallery application is displayed in a smaller area on the screen A, and less content is displayed on the interface 910 of the gallery application. The electronic device may receive a sliding operation (for example, an operation of sliding upwards by a finger) performed by the user on the interface 910 of the gallery application. In response to the sliding operation, the electronic device may update and display, on the interface 910 of the gallery application, content that is not displayed before the sliding operation is received.

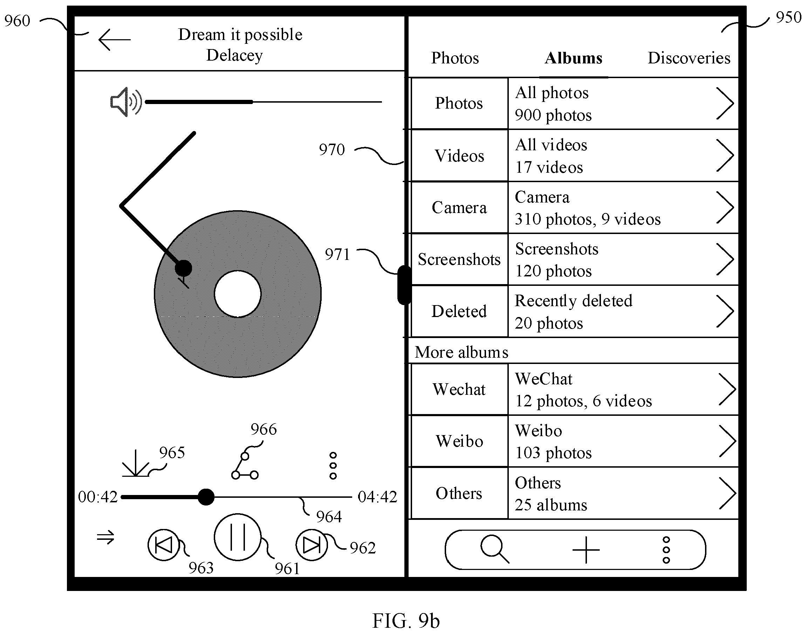

The electronic device may receive an unfolding operation 940 performed by the user on the foldable display screen. The interface of the gallery application and the interface of the music application are interfaces of list-type applications. Therefore, in response to the unfolding operation 940, the electronic device may switch the foldable display screen from the folded state to the unfolded state, and display the interface of the gallery application and the interface of the music application on the foldable display screen in the unfolded state through vertical screen splitting. For a schematic interface display diagram in which the interface of the gallery application and the interface of the music application are displayed on the foldable display screen in the unfolded state through vertical screen splitting, refer to FIG. 9b.

As shown in FIG. 9b, the electronic device may display an interface 950 of the gallery application and an interface 960 of the music application on the foldable display screen in the unfolded state through vertical screen splitting. The interface 950 of the gallery application may be displayed on a right side of the interface 960 of the music application. This is not limited to that shown in FIG. 9b. Alternatively, the interface 950 of the gallery application may be displayed on a left side of the interface 960 of the music application. This is not limited herein. The interface 950 of the gallery application may include one or more albums (for example, an "All photos" album, an "All videos" album, a "Camera" album, a "Screenshots" album, a "Recently deleted" album, a "WeChat" album, a "Weibo" album, and an "Others" album). The interface 960 of the music application may include controls such as a music play/pause button 961, a button 962 for switching to a next song, a button 963 for switching to a previous song, a music play progress bar 964, a music download button 965, and a music sharing button 966. The interface 950 of the gallery application and the interface 960 of the music application may be separated by a screen splitting line 970. For example, the electronic device may display the interface 960 of the music application in a display area on a left side of the screen splitting line 970, and the electronic device may display the interface 950 of the gallery application in a display area on a right side of the screen splitting line 970. There may be an adjustment button 971 on the screen splitting line 970.

The electronic device may receive an input operation (for example, an operation of pressing the adjustment button 971 by a finger to slide to the left or to the right) performed by the user on the adjustment button 971, and the electronic device may adjust a position of the screen splitting line 970 on the foldable display screen in the unfolded state. For example, when the screen splitting line 970 moves to the left, the interface 950 of the gallery application is displayed in a larger area on the foldable display screen in the unfolded state, and more content can be displayed on the interface 950 of the gallery application; and the interface 960 of the music application is displayed in a smaller area on the foldable display screen in the unfolded state, and less content can be displayed on the interface 960 of the music application.

In some other application scenarios of this application, for a viewing effect of the user, it is suitable to display play interfaces of some video applications or game applications through vertical screen splitting when the foldable display screen is in the unfolded state. Therefore, if there is at least one video or game interface in interfaces of two or more applications displayed on the screen A of the foldable display screen in the folded state in split-screen mode, the foldable display screen is switched from the folded state to the unfolded state, and the electronic device may display the interfaces of the two or more applications on the foldable display screen in the unfolded state through horizontal screen splitting. In this way, the viewing effect of the user can be improved.

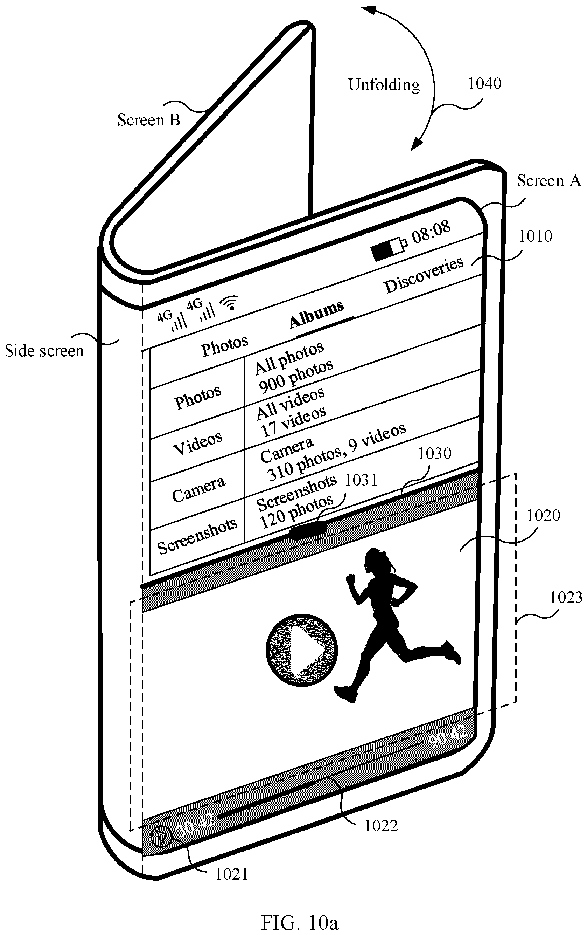

As shown in FIG. 10a, when the foldable display screen is in the folded state, the electronic device may display two or more applications on the screen A of the foldable display screen through horizontal screen splitting. There is at least one non-list application in the two or more applications displayed in split-screen mode. For example, the electronic device may display an interface 1010 of the gallery application and a play interface 1020 of the video application on the screen A in split-screen mode. The interface 1010 of the gallery application may be displayed above the play interface 1020 of the video application. This is not limited to that shown in FIG. 10a. Alternatively, the interface 1010 of the gallery application may be displayed below the play interface 1020 of the video application. This is not limited herein. The interface 1010 of the gallery application may include one or more albums (for example, an "All photos" album, an "All videos" album, a "Camera" album, and a "Screenshots" album). The play interface 1020 of the video application may include a video play/pause button 1021, a video play progress bar 1022, a video play picture 1023, and the like. The interface 1010 of the gallery application and the play interface 1020 of the video application may be separated by a screen splitting line 1030. For example, the interface 1010 of the gallery application may be displayed above the screen splitting line 1030, and the play interface 1020 of the video application may be displayed below the screen splitting line 1030. There may be an adjustment button 1031 on the screen splitting line 1030.

The electronic device may receive an input operation (for example, an operation of pressing the adjustment button 1031 by a finger to slide upwards or downwards) performed by the user on the adjustment button 1031, and the electronic device may adjust a position of the screen splitting line 1030 on the screen A. For example, when the screen splitting line 1030 moves upwards, the play interface 1020 of the video application is displayed in a larger area on the screen A, the interface 1010 of the gallery application is displayed in a smaller area on the screen A, and less content can be displayed on the interface 1010 of the gallery application. The electronic device may receive a sliding operation (for example, an operation of sliding upwards by a finger) performed by the user on the interface 1010 of the gallery application. In response to the sliding operation, the electronic device may update and display, on the interface 1010 of the gallery application, content that is not displayed before the sliding operation is received.

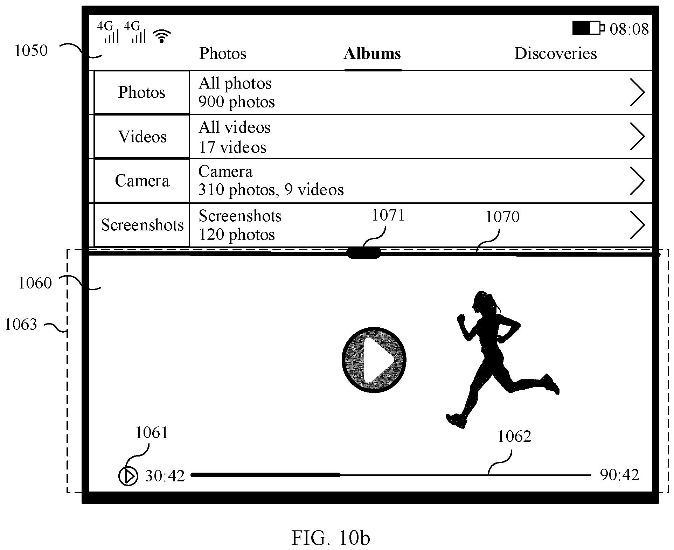

The electronic device may receive an unfolding operation 1040 performed by the user on the foldable display screen. The play interface of the video application is an interface of a non-list application. Therefore, in response to the unfolding operation 1040, the electronic device may switch the foldable display screen from the folded state to the unfolded state, and display the interface of the gallery application and the play interface of the video application on the foldable display screen in the unfolded state through horizontal screen splitting. For a schematic interface display diagram in which the interface of the gallery application and the play interface of the video application are displayed on the foldable display screen in the unfolded state through horizontal screen splitting, refer to FIG. 10b.

As shown in FIG. 10b, the electronic device may display an interface 1050 of the gallery application and a play interface 1060 of the video application on the foldable display screen in the unfolded state through horizontal screen splitting. The interface 1050 of the gallery application may be displayed above the play interface 1060 of the video application. This is not limited to that shown in FIG. 10b. Alternatively, the interface 1050 of the gallery application may be displayed below the play interface 1060 of the video application. This is not limited herein. The interface 1050 of the gallery application may include one or more albums (for example, an "All photos" album, an "All videos" album, a "Camera" album, and a "Screenshots" album). The play interface 1060 of the video application may include a video play/pause button 1061, a video play progress bar 1062, a video play picture 1063, and the like. The interface 1050 of the gallery application and the play interface 1060 of the video application may be separated by a screen splitting line 1070. For example, on the foldable display screen in the unfolded state, the electronic device may display the interface 1050 of the gallery application above the screen splitting line 1070, and display the play interface 1060 of the video application below the screen splitting line 1070.

There may be an adjustment button 1071 on the screen splitting line 1070. The electronic device may receive an input operation (for example, an operation of pressing the adjustment button 1071 by a finger to slide to the left or to the right) performed by the user on the adjustment button 1071, and the electronic device may adjust a position of the screen splitting line 1070 on the foldable display screen in the unfolded state. For example, when the screen splitting line 1070 moves upwards, the interface 1050 of the gallery application is displayed in a smaller area on the foldable display screen in the unfolded state, less content can be displayed on the interface 1050 of the gallery application, and the play interface 1060 of the video application is displayed in a larger area on the foldable display screen in the unfolded state.

In some other application scenarios of this application, if the electronic device displays interfaces of two or more applications on the foldable display screen through horizontal screen splitting, the electronic device may receive an input operation that is for switching a screen splitting direction and that is performed by the user. In response to the input operation for switching a screen splitting direction, the electronic device may display the interfaces of the two or more applications on the foldable display screen through vertical screen splitting. If the electronic device displays interfaces of two or more applications on the foldable display screen through vertical screen splitting, the electronic device may display the interfaces of the two or more applications on the foldable display screen through horizontal screen splitting. In this way, the electronic device can flexibly adjust a screen splitting direction of the foldable display screen based on an input operation performed by the user, thereby improving viewing experience of the user.

For example, the input operation for switching a screen splitting direction may be to rotate the foldable display screen to the left, and then rotate the foldable display screen in a reverse direction. If interfaces of two or more applications are displayed on the foldable display screen in the unfolded state through horizontal screen splitting, the electronic device receives the input operation that is of rotating the foldable display screen to the left and then rotating the foldable display screen in the reverse direction and that is performed by the user. In response to the input operation of rotating the foldable display screen to the left and then rotating the foldable display screen in the reverse direction, the electronic device may display the interfaces of the two or more applications through vertical screen splitting. A sequence of arranging the interfaces of the two or more applications from left to right when vertical screen splitting is performed is the same as a sequence of arranging the interfaces of the two or more applications from top to bottom when horizontal screen splitting is performed.

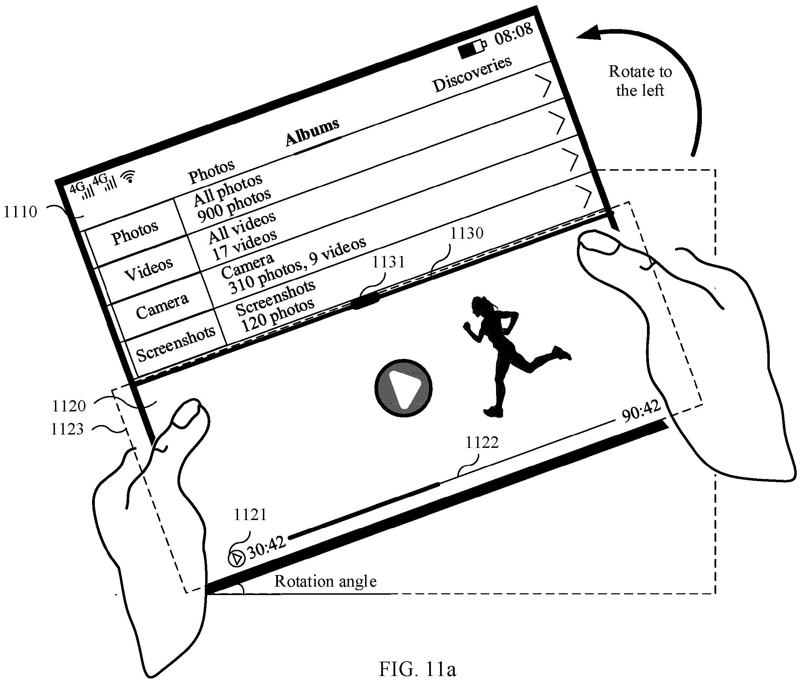

For example, as shown in FIG. 11a, the foldable display screen is in the unfolded state, and the electronic device may display an interface 1110 of the gallery application and a play interface 1120 of the video application on the foldable display screen in the unfolded state through horizontal screen splitting. The interface 1110 of the gallery application may include one or more albums (for example, an "All photos" album, an "All videos" album, a "Camera" album, and a "Screenshots" album). The play interface of the video application may include a video play/pause button 1121, a video play progress bar 1122, a video play picture 1123, and the like. The interface 1110 of the gallery application and the play interface 1120 of the video application may be separated by a screen splitting line 1130. For example, the electronic device may display the interface 1110 of the gallery application in a display area, of the foldable display screen, above the screen splitting line 1130, and the electronic device may display the play interface 1120 of the video application in a display area, of the foldable display screen, below the screen splitting line 1130. There may be a button 1031 for adjusting a position of the screen splitting line on the screen splitting line 1130. The electronic device may receive an input operation (for example, an operation of pressing the adjustment button 1131 by a finger to slide to the left or to the right) performed by the user on the adjustment button 1131, and the electronic device may adjust a position of the screen splitting line 1170 on the foldable display screen in the unfolded state. For example, when the screen splitting line 1130 moves upwards, the interface 1110 of the gallery application is displayed in a smaller area on the foldable display screen in the unfolded state, less content can be displayed on the interface 1110 of the gallery application, and the play interface 1120 of the video application is displayed in a larger area on the foldable display screen in the unfolded state.

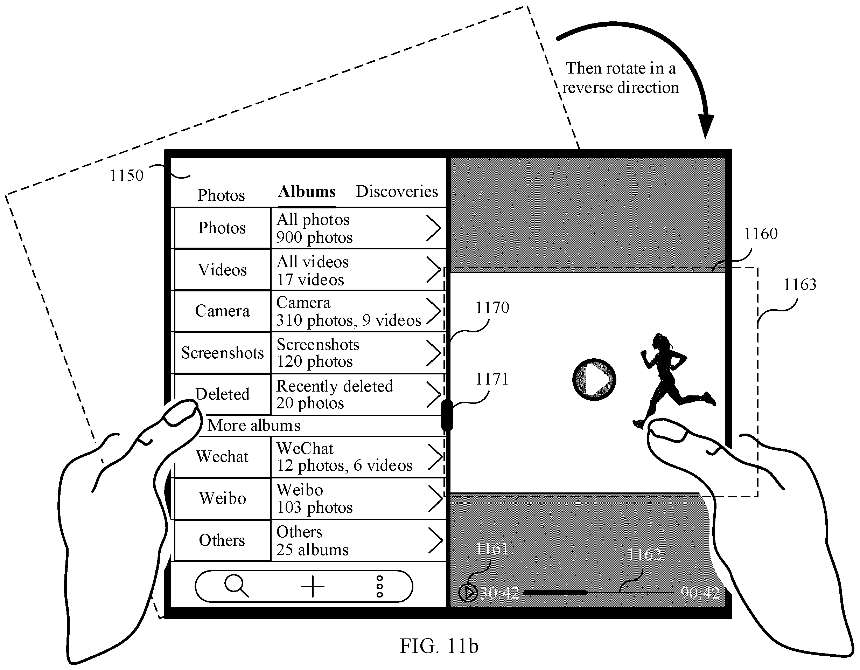

As shown in FIG. 11a and FIG. 11b, when the interface 1110 of the gallery application and the play interface 1120 of the video application are displayed on the foldable display screen in the unfolded state through horizontal screen splitting, the electronic device may receive a screen splitting direction switching operation entered by the user. The screen splitting direction switching operation may be to rotate the electronic device to the left, and then rotate the electronic device in a reverse direction. In response to the screen splitting direction switching operation, the electronic device may display an interface of the gallery application and a play interface of the video application on the foldable display screen in the unfolded state through vertical screen splitting. For the interface of the gallery application and the play interface of the video application that are displayed on the foldable display screen after the screen splitting direction of the foldable display screen in the unfolded state is switched, refer to FIG. 11b.

As shown in FIG. 11b, the electronic device may display an interface 1150 of the gallery application and a play interface 1160 of the video application on the foldable display screen in the unfolded state through vertical screen splitting. The interface 1150 of the gallery application may include one or more albums (for example, an "All photos" album, an "All videos" album, a "Camera" album, a "Screenshots" album, a "Recently deleted" album, a "WeChat" album, a "Weibo" album, and an "Others" album). The play interface of the video application may include a video play/pause button 1161, a video play progress bar 1162, a video play picture 1163, and the like. The interface 1150 of the gallery application and the play interface 1160 of the video application may be separated by a screen splitting line 1170. For example, the interface 1150 of the gallery application may be displayed in a display area, of the foldable display screen, on a left side of the screen splitting line 1170, and the play interface 1160 of the video application may be displayed in a display area, of the foldable display screen, on a right side of the screen splitting line 1170. There may be a button 1171 for adjusting a position of the screen splitting line on the screen splitting line 1170. The electronic device may receive an input operation (for example, an operation of pressing the adjustment button 1171 by a finger to slide to the left or to the right) performed by the user on the adjustment button 1171, and the electronic device may adjust a position of the screen splitting line 1170 on the foldable display screen in the unfolded state. For example, when the screen splitting line 1170 moves to the left, the interface 1150 of the gallery application is displayed in a smaller area on the foldable display screen in the unfolded state, less content can be displayed on the interface 1150 of the gallery application, and the play interface 1160 of the video application is displayed in a larger area on the foldable display screen in the unfolded state.

In an optional implementation, if interfaces of two or more applications are displayed on the foldable display screen in the unfolded state through horizontal screen splitting, the electronic device receives an input operation that is of rotating the foldable display screen to the right and then rotating the foldable display screen in a reverse direction and that is performed by the user. In response to the input operation of rotating the foldable display screen to the right and then rotating the foldable display screen in the reverse direction, the electronic device may display the interfaces of the two or more applications through vertical screen splitting. A sequence of arranging the interfaces of the two or more applications from left to right when vertical screen splitting is performed is the same as a sequence of arranging the interfaces of the two or more applications from bottom to top when horizontal screen splitting is performed.

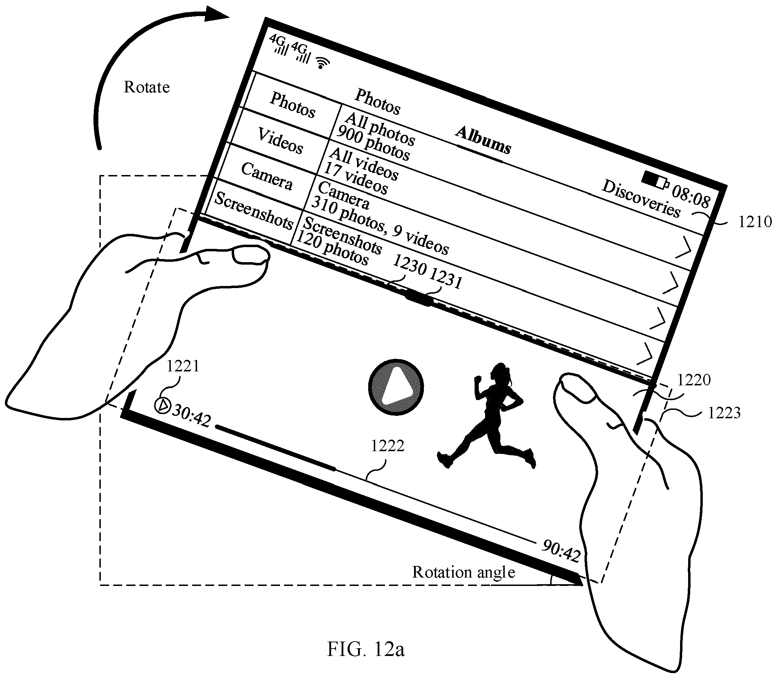

For example, as shown in FIG. 12a, the foldable display screen is in the unfolded state, and the electronic device may display an interface 1210 of the gallery application and a play interface 1220 of the video application on the foldable display screen in the unfolded state through horizontal screen splitting. The interface 1210 of the gallery application may include one or more albums (for example, an "All photos" album, an "All videos" album, a "Camera" album, and a "Screenshots" album). The play interface of the video application may include a video play/pause button 1221, a video play progress bar 1222, a video play picture 1223, and the like. The interface 1210 of the gallery application and the play interface 1220 of the video application may be separated by a screen splitting line 1230. For example, the interface 1210 of the gallery application may be displayed in a display area, of the foldable display screen, above the screen splitting line 1230, and the play interface 1220 of the video application may be displayed in a display area, of the foldable display screen, below the screen splitting line 1230. There may be a button 1231 for adjusting a position of the screen splitting line on the screen splitting line 1230. The electronic device may receive an input operation (for example, an operation of pressing the adjustment button 1231 by a finger to slide to the left or to the right) performed by the user on the adjustment button 1231, and the electronic device may adjust a position of the screen splitting line 1230 on the foldable display screen in the unfolded state. For example, when the screen splitting line 1230 moves upwards, the interface 1210 of the gallery application is displayed in a smaller area on the foldable display screen in the unfolded state, less content can be displayed on the interface 1210 of the gallery application, and the play interface 1220 of the video application is displayed in a larger area on the foldable display screen in the unfolded state.

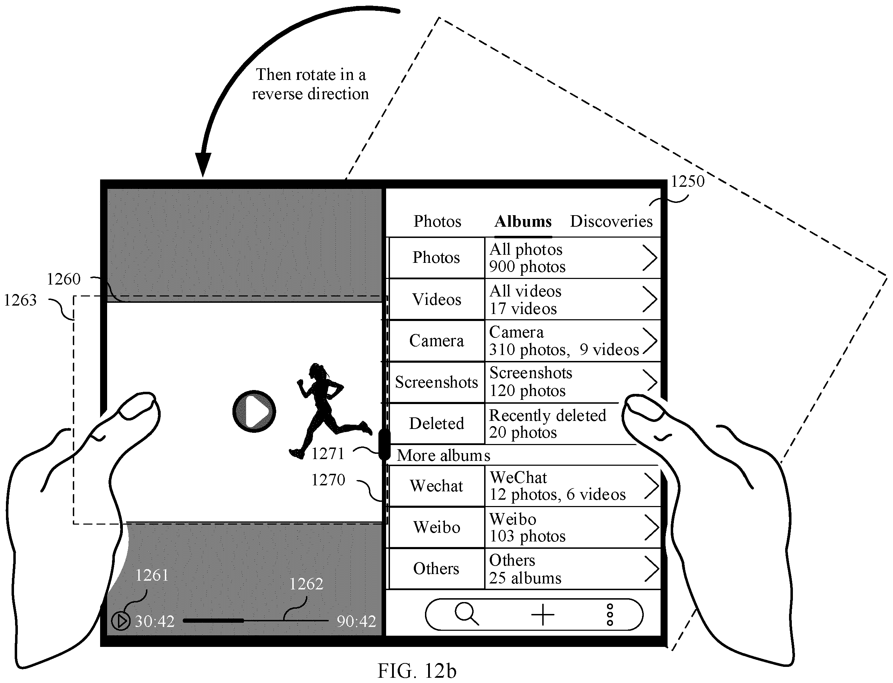

As shown in FIG. 12a and FIG. 12b, when the interface 1210 of the gallery application and the play interface 1220 of the video application are displayed on the foldable display screen in the unfolded state through horizontal screen splitting, the electronic device may receive a screen splitting direction switching operation entered by the user. The screen splitting direction switching operation may be to rotate the electronic device to the right, and then rotate the electronic device in a reverse direction. In response to the screen splitting direction switching operation, the electronic device may display an interface of the gallery application and a play interface of the video application on the foldable display screen in the unfolded state through vertical screen splitting. For the interface of the gallery application and the play interface of the video application that are displayed on the foldable display screen after the screen splitting direction of the foldable display screen in the unfolded state is switched, refer to FIG. 12b.

As shown in FIG. 12b, the electronic device may display an interface 1250 of the gallery application and a play interface 1260 of the video application on the foldable display screen in the unfolded state through vertical screen splitting. The interface 1250 of the gallery application may include one or more albums (for example, "All photos" album, an "All videos" album, a "Camera" album, a "Screenshots" album, a "Recently deleted" album, a "WeChat" album, a "Weibo" album, and an "Others" album). The play interface of the video application may include a video play/pause button 1261, a video play progress bar 1262, a video play picture 1263, and the like. The interface 1250 of the gallery application and the play interface 1260 of the video application may be separated by a screen splitting line 1270. For example, the interface 1250 of the gallery application may be displayed in a display area, of the foldable display screen, on a right side of the screen splitting line 1270, and the play interface 1160 of the video application may be displayed in a display area, of the foldable display screen, on a left side of the screen splitting line 1270. There may be a button 1271 for adjusting a position of the screen splitting line on the screen splitting line 1270. The electronic device may receive an input operation (for example, an operation of pressing the adjustment button 1271 by a finger to slide to the left or to the right) performed by the user on the adjustment button 1271, and the electronic device may adjust a position of the screen splitting line 1270 on the foldable display screen in the unfolded state. For example, when the screen splitting line 1270 moves to the left, the interface 1250 of the gallery application is displayed in a larger area on the foldable display screen in the unfolded state, more content can be displayed on the interface 1250 of the gallery application, and the play interface 1260 of the video application is displayed in a smaller area on the foldable display screen in the unfolded state.

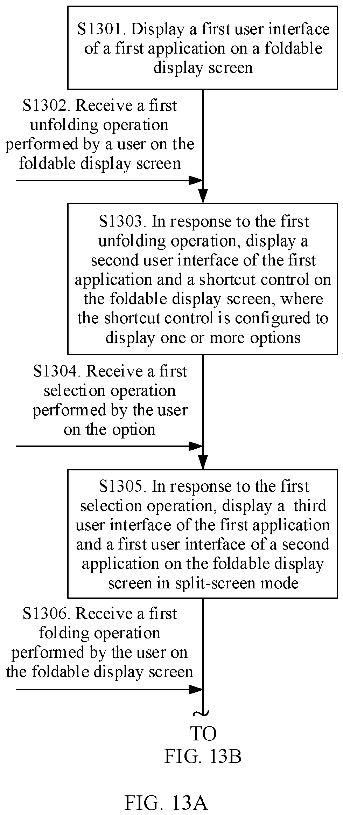

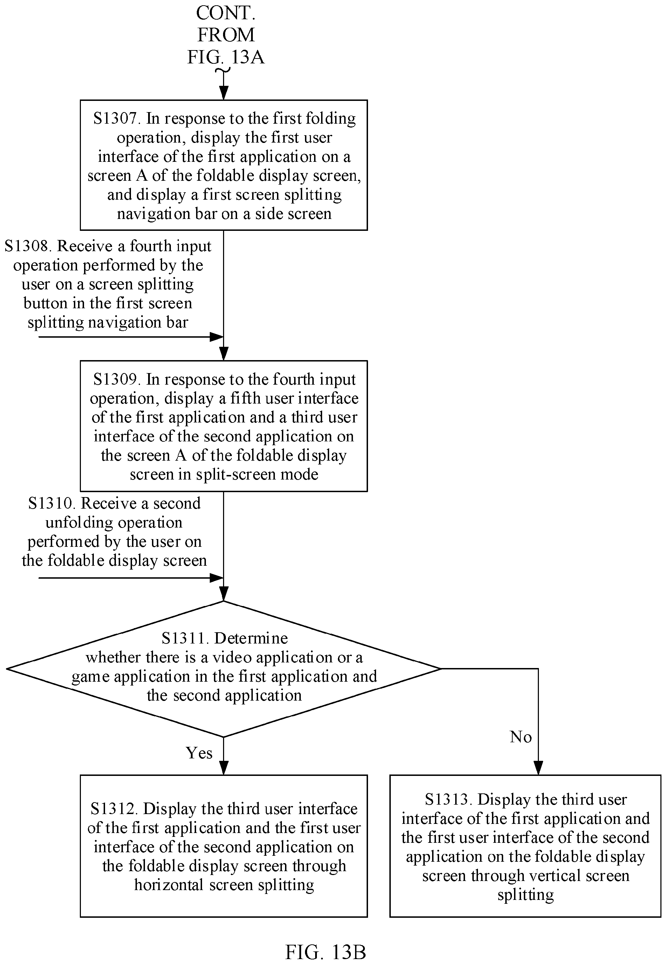

FIG. 13A and FIG. 13B are a schematic flowchart of an automatic screen splitting method according to an embodiment of this application. The method may include the following steps.

S1301. An electronic device displays a first user interface of a first application on a foldable display screen.

For example, the first application may be the gallery application shown in FIG. 3a, and the first user interface of the first application may be the interface 320 of the gallery application shown in FIG. 3b. For text description of the interface 320 of the gallery application, refer to the embodiment shown in FIG. 3b. Details are not described herein.

S1302. The electronic device receives a first unfolding operation performed by a user on the foldable display screen. S1303. In response to the first unfolding operation, the electronic device displays a second user interface of the first application and a shortcut control on the foldable display screen, where the shortcut control is configured to display one or more options.

For example, the first unfolding operation may be the unfolding operation 321 in the embodiment shown in FIG. 3b. The second user interface of the first application may be the user interface 330 of the gallery application shown in FIG. 3c. The shortcut control may be the shortcut menu 331 shown in FIG. 3c and FIG. 3d, or may be the prompt control 337 shown in FIG. 3f. After the user taps the prompt control 337, the shortcut menu 331 shown in FIG. 3g may be displayed as a response. The shortcut menu 331 includes one or more options. For text description of the one or more options, refer to the embodiment shown in FIG. 3b.

S1304. The electronic device receives a first selection operation performed by the user on the option. S1305. In response to the first selection operation, the electronic device displays a third user interface of the first application and a first user interface of a second application on the foldable display screen in split-screen mode.

For example, for the first selection operation, refer to the input operation 433 on the option 432 of the music application in the embodiment shown in FIG. 4a. For the third user interface of the first application, refer to the interface 440 of the gallery application shown in FIG. 4b. For the first user interface of the second application, refer to the interface 450 of the music application shown in FIG. 4b. For detailed content, refer to the embodiment shown in FIG. 4b. Details are not described herein.

S1306. The electronic device receives a first folding operation performed by the user on the foldable display screen. S1307. In response to the first folding operation, the electronic device displays the first user interface of the first application on a screen A of the foldable display screen, and displays a first screen splitting navigation bar on a side screen.

A display area of the foldable display screen is divided into the screen A, a screen B, and the side screen.

For example, the first folding operation may be the folding operation 511 in FIG. 5a. In response to the folding operation 511, the electronic device displays the first user interface of the first application. For the first user interface, refer to the user interface 530 of the gallery application shown in FIG. 5b. For the first screen splitting navigation bar, refer to the screen splitting navigation bar 550 shown in FIG. 5b. The first screen splitting navigation bar includes an option of the second application (for example, the option 553 of the music application shown in FIG. 5b and the option 653 of the music application shown in FIG. 6a) and a screen splitting button (for example, the screen splitting button 552 shown in FIG. 5b and the screen splitting button 652 shown in FIG. 6a).

The option of the second application is configured to: receive a third input operation performed by the user, and display a second user interface of the second application on the screen A. The screen splitting button is configured to: receive a fourth input operation performed by the user, and display a fifth user interface of the first application and a third user interface of the second application on the screen A in split-screen mode.

For example, the third input operation may be the input operation 555 in FIG. 5b. The second user interface of the second application may be the interface 540 of the music application shown in FIG. 5c.

S1308. Receive the fourth input operation performed by the user on the screen splitting button in the first screen splitting navigation bar. S1309. In response to the fourth input operation, display the fifth user interface of the first application and the third user interface of the second application on the screen A of the foldable display screen in split-screen mode.

For example, the fourth input operation may be the input operation 656 in FIG. 6a. The fifth user interface of the first application may be interface 670 of the gallery application shown in FIG. 6b, and the third user interface of the second application may be the interface 680 of the music application shown in FIG. 6b. For details, refer to the foregoing embodiment. Details are not described herein.

S1310. The electronic device receives a second unfolding operation performed by the user on the foldable display screen.

For example, the second unfolding operation may be the unfolding operation 940 in FIG. 9a.

S 1311. The electronic device determines whether there is a video application or a game application in the first application and the second application, and if there is a video application or a game application in the first application and the second application, performs S1312 in which the electronic device displays the second user interface of the first application and the first user interface of the second application on the foldable display screen through horizontal screen splitting; or if there is no video application or game application in the first application and the second application, performs S1313 in which the electronic device displays the third user interface of the first application and the first user interface of the second application on the foldable display screen through vertical screen splitting.

For example, for how to display the third user interface of the first application (for example, the interface 950 of the gallery application in FIG. 9b) and the first user interface of the second application (for example, the interface 960 of the music application in FIG. 9b) on the foldable display screen through vertical screen splitting, refer to FIG. 9b. Details are not described herein.

According to the automatic screen splitting method provided in this application, when the electronic device receives an unfolding operation performed by the user, a shortcut menu may be displayed, so that the user can quickly perform screen splitting when the foldable screen is unfolded into a large screen, thereby improving user experience.

In an implementation, before the first selection operation is received, the electronic device receives a first input operation performed by the user on the second user interface of the first application. In response to the first input operation, the electronic device may display a fourth user interface of the first application. An option in the shortcut control before the first input operation is received is different from an option in the shortcut control after the first input operation is received. In this way, an option related to an interface of the first application may be displayed in the shortcut control based on a change of the currently displayed interface of the first application, so that the user can directly perform screen splitting for the associated interface, thereby improving user experience. For example, when a main interface of a gallery application is currently displayed on the foldable display screen, the shortcut control includes an option for displaying the main interface of the gallery application and a main interface of a WeChat application in split-screen mode. When an "All photos" album interface is currently displayed on the foldable display screen, the shortcut control includes an option for displaying the "All photos" album interface and an interface of WeChat Moments in split-screen mode.

For example, the first input operation may be the input operation 339 on the "All photos" album entry shown in FIG. 3i. The fourth user interface of the first application may be the "All photos" album interface 340 shown in FIG. 3j. Before the first input operation is received, the shortcut control may be the shortcut menu 331 in FIG. 3i. After the first input operation is received, the shortcut control may be the shortcut menu 341 in FIG. 3j. For detailed content, refer to the embodiments in FIG. 3i and FIG. 3j. Details are not described herein.

In an implementation, a display area of the foldable display screen is divided into a first display area and a second display area, the third user interface of the first application (for example, the interface 440 of the gallery application in FIG. 4c) is displayed in the first display area (for example, a right half part of the foldable display screen), and the first user interface of the second application (for example, the interface 450 of the music application in FIG. 4c) is displayed in the second display area (for example, a left half part of the foldable display screen). The method further includes: The electronic device receives a second input operation (for example, the input operation 441 shown in FIG. 4c) performed by the user on the foldable display screen, and in response to the second input operation, the electronic device displays the first user interface of the second application (for example, the interface 440 of the gallery application in FIG. 4d) in the first display area (for example, the left half part of the foldable display screen), and displays the third user interface of the first application (for example, the interface 450 of the music application shown in FIG. 4d) in the second display area (for example, the right half part of the foldable display screen).

In an implementation, a display area of the foldable display screen is divided into a screen A, a screen B, and a side screen. When the third user interface of the first application and the first user interface of the second application are displayed on the foldable display screen in split-screen mode, the method further includes: The electronic device receives a second folding operation performed by the user on the foldable display screen; and in response to the second folding operation, the electronic device determines, from the first application and the second application, a last application operated by the user before the first folding operation is received.

If the last application operated by the user is the first application, the electronic device displays the first user interface of the first application on the screen A of the foldable display screen, and displays a first screen splitting navigation bar on the side screen of the foldable display screen. The first screen splitting navigation bar includes an option of the second application and a screen splitting button. The option of the second application is configured to: receive a third input operation performed by the user, and display a second user interface of the second application on the screen A. The screen splitting button is configured to: receive a fourth input operation performed by the user, and display a fifth user interface of the first application and a third user interface of the second application on the screen A in split-screen mode.

If the last application operated by the user is the second application (for example, the music application shown in FIG. 8a), the electronic device displays a third user interface of the second application (for example, the interface 860 of the music application shown in FIG. 8b) on the screen A of the foldable display screen, and displays a second screen splitting navigation bar (for example, the screen splitting navigation bar 850 shown in FIG. 8b) on the side screen of the foldable display screen. The second screen splitting navigation bar includes an option of the first application (for example, the option 853 of the gallery application shown in FIG. 8b) and the screen splitting button (for example, the screen splitting button 852 shown in FIG. 8b). The option of the first application is configured to: receive a fifth input operation performed by the user, and display the first user interface of the first application on the screen A.

In an implementation, the first application is different from the second application. Alternatively, the first application is the same as the second application. Alternatively, when the second application is the same as the first application, the option of the second application is the option of the first application. Alternatively, the first application is an album application. Alternatively, the second application is a music application. Alternatively, the shortcut menu is floated in the second user interface of the first application. Alternatively, the first user interface of the first application is different from the second user interface of the first application. Alternatively, that the electronic device displays the first user interface of the first application on the foldable display screen specifically includes: The first user interface of the first application is displayed in a part of the area of the foldable display screen. Alternatively, that the electronic device displays the third user interface of the first user and the first user interface of the second application on the foldable display screen in split-screen mode specifically includes: The electronic device displays the second user interface of the first user and the first user interface of the second application on the foldable display screen in split-screen mode, and displays a screen splitting line at an intersection of the third user interface of the first application and the first user interface of the second application. The screen splitting line is used to adjust a ratio at which the third user interface of the first application and the first user interface of the second application are displayed on the foldable display screen.

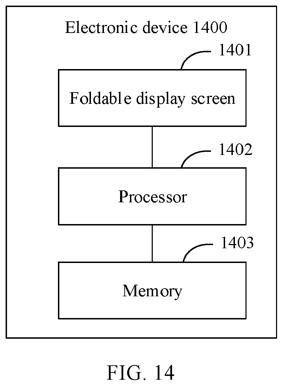

FIG. 14 is a schematic structural diagram of an electronic device according to this application. As shown in FIG. 14, the electronic device 1400 includes a foldable display screen 1401, a processor 1402, and a memory 1403. The foldable display screen 1401, the processor 1402, and the memory 1403 communicate with each other by using a bus.

The foldable display screen 1401 may be configured to display a first user interface of a first application. The processor 1402 may be configured to detect a first unfolding operation performed by a user on the foldable display screen 1401.

In response to the first unfolding operation, the foldable display screen 1401 may be further configured to display a second user interface of the first application and a shortcut control. The shortcut control is configured to display one or more options.

The foldable display screen 1401 may be further configured to receive a first selection operation performed by the user on the option. In response to the first selection operation, the foldable display screen 1401 may be further configured to display a third user interface of the first application and a first user interface of a second application in split-screen mode.

The processor 1402 may be further configured to detect a first folding operation performed by the user on the foldable display screen 1401.

In response to the first folding operation, the foldable display screen 1401 is configured to: display the first user interface of the first application on a screen A, and display a first screen splitting navigation bar on a side screen.

The foldable display screen 1401 may be further configured to receive a fourth input operation performed by the user on a screen splitting button in the first screen splitting navigation bar. In response to the fourth input operation, the foldable display screen 1401 is configured to display a fifth user interface of the first application and a third user interface of the second application on the screen A in split-screen mode.

The processor 1402 is further configured to detect a second unfolding operation performed by the user. In response to the second unfolding operation, the processor 1402 determines whether there is a video application or a game application in the first application and the second application. If there is a video application or a game application in the first application and the second application, the foldable display screen 1401 is configured to display the third user interface of the first application and the first user interface of the second application through horizontal screen splitting. If there is no video application or game application in the first application and the second application, the foldable display screen 1401 is configured to display the third user interface of the first application and the first user interface of the second application through vertical screen splitting.

According to the automatic screen splitting method provided in this application, when the processor 1402 detects an unfolding operation performed by the user, the foldable display screen 1401 is configured to display the shortcut control, so that the user can quickly perform screen splitting when the foldable screen is unfolded into a large screen, thereby improving user experience.

In an implementation, before the foldable display screen 1401 receives the first selection operation performed by the user, the foldable display screen 1401 may be further configured to receive a first input operation performed by the user. In response to the first input operation, the foldable display screen 1401 may be further configured to display a fourth user interface of the first application. An option in the shortcut control before the first input operation is received is different from an option in the shortcut control after the first input operation is received.

In an implementation, a display area of the foldable display screen is divided into a first display area and a second display area, the third user interface of the first application is displayed in the first display area, and the first user interface of the second application is displayed in the second display area. The foldable display screen 1401 may be configured to receive a second input operation performed by the user. In response to the second input operation, the foldable display screen 1401 may be configured to: display the first user interface of the second application in the first display area, and display the third user interface of the first application in the second display area.

In an implementation, a display area of the foldable display screen is divided into a screen A, a screen B, and a side screen. When the third user interface of the first application and the first user interface of the second application are displayed on the foldable display screen 1401 in split-screen mode, the processor 1402 may be further configured to detect a second folding operation performed by the user on the foldable display screen 1401. In response to the second folding operation, the processor 1402 is further configured to determine, from the first application and the second application, a last application operated by the user before the first folding operation is received.

If the last application operated by the user is the first application, the foldable display screen 1401 may be configured to: display the first user interface of the first application on the screen A, and display a first screen splitting navigation bar on the side screen. The first screen splitting navigation bar includes an option of the second application and a screen splitting button. The option of the second application is configured to: receive a third input operation performed by the user, and display a second user interface of the second application on the screen A. The screen splitting button is configured to: receive a fourth input operation performed by the user, and display a fifth user interface of the first application and a third user interface of the second application on the screen A in split-screen mode.

If the last application operated by the user is the second application, the foldable display screen 1401 may be configured to: display a third user interface of the second application on the screen A, and display a second screen splitting navigation bar on the side screen. The second screen splitting navigation bar includes an option of the first application and the screen splitting button. The option of the first application is configured to: receive a fifth input operation performed by the user, and display the first user interface of the first application on the screen A.

It may be understood that for content that is not described in detail in the embodiment shown in FIG. 14, refer to the embodiment shown in FIG. 13A and FIG. 13B. Details are not described herein.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. An automatic screen splitting method, applied to an electronic device provided with a foldable display screen, wherein the method comprises:
displaying, by the electronic device, a first user interface of a first application on the foldable display screen;
receiving, by the electronic device, a first unfolding operation performed by a user on the foldable display screen;
in response to the first unfolding operation, displaying, by the electronic device, a second user interface of the first application and a shortcut control on the foldable display screen, wherein the second user interface of the first application is displayed in full screen mode, and the shortcut control is configured to display one or more options;
receiving, by the electronic device, a first selection operation performed on the option; and
in response to the first selection operation, displaying, by the electronic device, a third user interface of the first application and a first user interface of a second application on the foldable display screen in split-screen mode.

2. The method according to claim 1, wherein before the receiving a first selection operation, the method further comprises:
receiving, by the electronic device, a first input operation performed by the user on the second user interface of the first application; and
in response to the first input operation, displaying, by the electronic device, a fourth user interface of the first application, wherein an option in the shortcut control before the first input operation is received is different from an option in the shortcut control after the first input operation is received.

3. The method according to claim 1, wherein a display area of the foldable display screen is divided into a first display area and a second display area, the third user interface of the first application is displayed in the first display area, and the first user interface of the second application is displayed in the second display area; and
the method further comprises:
receiving, by the electronic device, a second input operation performed by the user on the foldable display screen; and
in response to the second input operation, displaying, by the electronic device, the first user interface of the second application in the first display area, and displaying the third user interface of the first application in the second display area.

4. The method according to claim 1, wherein a display area of the foldable display screen is divided into a screen A, a screen B, and a side screen; and the method further comprises:
receiving, by the electronic device, a first folding operation performed by the user on the foldable display screen; and
in response to the first folding operation, displaying, by the electronic device, the first user interface of the first application on the screen A of the foldable display screen, and displaying a first screen splitting navigation bar on the side screen, wherein the first screen splitting navigation bar comprises an option of the second application and a screen splitting button, wherein
the option of the second application is configured to: receive a third input operation performed by the user, and display a second user interface of the second application on the screen A; and the screen splitting button is configured to: receive a fourth input operation performed by the user, and display a fifth user interface of the first application and a third user interface of the second application on the screen A in split-screen mode.

5. The method according to claim 1, wherein a display area of the foldable display screen is divided into a screen A, a screen B, and a side screen; and when the displaying a third user interface of the first application and a first user interface of a second application on the foldable display screen in split-screen mode, the method further comprises:
receiving, by the electronic device, a second folding operation performed by the user on the foldable display screen;
in response to the second folding operation, determining, by the electronic device from the first application and the second application, a last application operated by the user before the first folding operation is received; and
if the last application operated by the user is the first application, displaying, by the electronic device, the first user interface of the first application on the screen A of the foldable display screen, and displaying a first screen splitting navigation bar on the side screen of the foldable display screen, wherein the first screen splitting navigation bar comprises an option of the second application and a screen splitting button; the option of the second application is configured to: receive a third input operation performed by the user, and display a second user interface of the second application on the screen A; and the screen splitting button is configured to: receive a fourth input operation performed by the user, and display a fifth user interface of the first application and a third user interface of the second application on the screen A in split-screen mode; or
if the last application operated by the user is the second application, displaying, by the electronic device, a third user interface of the second application on the screen A of the foldable display screen, and displaying a second screen splitting navigation bar on the side screen of the foldable display screen, wherein the second screen splitting navigation bar comprises an option of the first application and the screen splitting button; and the option of the first application is configured to: receive a fifth input operation performed by the user, and display the first user interface of the first application on the screen A.

6. The method according to claim 5, wherein the method further comprises:
when the electronic device displays the third user interface of the first application and the third user interface of the second application on the screen A of the foldable display screen in split-screen mode, receiving, by the electronic device, a second unfolding operation performed by the user; and
in response to the second unfolding operation, displaying, by the electronic device, the third user interface of the first application and the first user interface of the second application on the foldable display screen in split-screen mode.

7. The method according to claim 1 or 6, wherein the displaying, by the electronic device, the third user interface of the first application and the first user interface of the second application on the foldable display screen in split-screen mode specifically comprises:
determining, by the electronic device, whether there is a video application or a game application in the first application and the second application; and if there is a video application or a game application in the first application and the second application, displaying, by the electronic device, the third user interface of the first application and the first user interface of the second application on the foldable display screen through horizontal screen splitting; or if there is no video application or game application in the first application and the second application, displaying, by the electronic device, the third user interface of the first application and the first user interface of the second application on the foldable display screen through vertical screen splitting.

8. The method according to any one of claims 1 to 7, wherein the first application is different from the second application; or
the first application is the same as the second application; or
when the second application is the same as the first application, the option of the second application is the option of the first application; or
the first application is an album application; or
the second application is a music application; or
the shortcut menu is floated in the second user interface of the first application; or
the first user interface of the first application is different from the second user interface of the first application; or
the displaying, by the electronic device, a first user interface of a first application on the foldable display screen specifically comprises:
displaying the first user interface of the first application in a part of the area of the foldable display screen; or
the displaying, by the electronic device, the third user interface of the first user and the first user interface of the second application on the foldable display screen in split-screen mode specifically comprises:
displaying, by the electronic device, the second user interface of the first user and the first user interface of the second application on the foldable display screen in split-screen mode, and displaying a screen splitting line at an intersection of the third user interface of the first application and the first user interface of the second application, wherein the screen splitting line is used to adjust a ratio at which the third user interface of the first application and the first user interface of the second application are displayed on the foldable display screen.

9. An electronic device, comprising a memory, a foldable display screen, and at least one processor, wherein the memory stores program code; the memory, the foldable display screen, and the at least one processor communicate with each other; and the processor runs the code to indicate the electronic device to perform the method according to any one of claims 1 to 8.

10. A computer storage medium, comprising computer instructions, wherein when the computer instructions are run on an electronic device, the electronic device is enabled to perform the method according to any one of claims 1 to 8.

11. A computer program product, wherein when the computer program product runs on a computer, the computer is enabled to perform the method according to any one of claims 1 to 8.

12. A graphical user interface, wherein the graphical user interface is stored in an electronic device; the electronic device comprises a foldable display screen, a memory, and one or more processors; the one or more processors are configured to execute one or more computer programs stored in the memory; and the graphical user interface comprises:
displaying a first user interface of a first application on the foldable display screen;
in response to a received first unfolding operation performed on the foldable display screen, displaying a second user interface of the first application and a shortcut control on the foldable display screen, wherein the second user interface of the first application is displayed in full screen mode, and the shortcut control is configured to display one or more options; and
in response to a received first selection operation performed on the option, displaying a third user interface of the first application and a first user interface of a second application on the foldable display screen in split-screen mode.

13. The graphical user interface according to claim 12, wherein the graphical user interface further comprises:
in response to a received first input operation performed on the second user interface of the first application, displaying a fourth user interface of the first application on the foldable display screen, wherein an option in the shortcut control before the first input operation is received is different from an option in the shortcut control after the first input operation is received.

14. The graphical user interface according to claim 12, wherein a display area of the foldable display screen is divided into a first display area and a second display area, the third user interface of the first application is displayed in the first display area, and the first user interface of the second application is displayed in the second display area; and
the graphical user interface further comprises:
in response to a second input operation performed on the foldable display screen, displaying the first user interface of the second user in the first display area, and displaying the third user interface of the first application in the second display area.

15. The graphical user interface according to claim 12, wherein a display area of the foldable display screen is divided into a screen A, a screen B, and a side screen; and the graphical user interface further comprises:
in response to a received first folding operation performed on the foldable display screen, displaying the first user interface of the first application on the screen A, and displaying a first screen splitting navigation bar on the side screen, wherein the first screen splitting navigation bar comprises an option of the second application and a screen splitting button, wherein
the option of the second application is configured to: receive a third input operation performed by a user, and display a second user interface of the second application on the screen A; and the screen splitting button is configured to: receive a fourth input operation performed by the user, and display a fifth user interface of the first application and a third user interface of the second application on the screen A in split-screen mode.

16. The method according to claim 11, wherein a display area of the foldable display screen is divided into a screen A, a screen B, and a side screen; and when the displaying a second user interface of the first application and a first user interface of a second application on the foldable display screen in split-screen mode, the graphical user interface further comprises:
in response to a received second folding operation performed on the foldable display screen, if a last application operated by the user is the first application, displaying the third user interface of the first application on the screen A, and displaying a first screen splitting navigation bar on the side screen, wherein the first screen splitting navigation bar comprises an option of the second application and a screen splitting button; the option of the second application is configured to: receive a third input operation performed by the user, and display a second user interface of the second application on the screen A; and the screen splitting button is configured to: receive a fourth input operation performed by the user, and display a fifth user interface of the first application and a third user interface of the second application on the screen A in split-screen mode; or
if a last application operated by the user is the second application, displaying a third user interface of the first application on the screen A, and displaying the second screen splitting navigation bar on the side screen, wherein the second screen splitting navigation bar comprises an option of the first application and the screen splitting button; and the option of the first application is configured to: receive a fifth input operation performed by the user, and display the first user interface of the first application on the screen A.

17. The method according to claim 16, wherein the graphical user interface further comprises:
when displaying the third user interface of the first application and the third user interface of the second application on the screen A in split-screen mode, in response to a received second unfolding operation performed on the foldable display screen, displaying the third user interface of the first application and the first user interface of the second application on the foldable display screen in split-screen mode.

18. The graphical user interface according to claim 12 or 17, wherein the displaying the third user interface of the first application and the first user interface of the second application on the foldable display screen in split-screen mode specifically comprises:
when there is a video application or a game application in the first application and the second application, displaying the third user interface of the first application and the first user interface of the second application on the foldable display screen through horizontal screen splitting; or
when the first application and the second application are non-video applications or non-game applications, displaying the third user interface of the first application and the first user interface of the second application on the foldable display screen through vertical screen splitting.

19. The graphical user interface according to any one of claims 12 to 18, wherein the first application is different from the second application; or
the first application is the same as the second application; or
when the second application is the same as the first application, the option of the second application is the option of the first application; or
the first application is an album application; or
the second application is a music application; or
the shortcut menu is floated in the second user interface of the first application; or
the first user interface of the first application is different from the second user interface of the first application; or
the displaying a first user interface of a first application on the foldable display screen specifically comprises:
displaying the first user interface of the first application in a part of the area of the foldable display screen; or
the displaying the third user interface of the first user and the first user interface of the second application on the foldable display screen in split-screen mode specifically comprises:
displaying the second user interface of the first user and the first user interface of the second application on the foldable display screen in split-screen mode, and displaying a screen splitting line at an intersection of the third user interface of the first application and the first user interface of the second application, wherein the screen splitting line is used to adjust a ratio at which the third user interface of the first application and the first user interface of the second application are displayed on the foldable display screen.
